# EUROPÄISCHE PATENTSCHRIFT

(11) **EP 2 232 111 B1**
(45) Veröffentlichungstag und Bekanntmachung des Hinweises auf die Patenterteilung: **20.06.2012**
(21) Anmeldenummer: 08802424.5
(22) Anmeldetag: 19.09.2008
(51) Int. Cl.: F16K 1/44

(54) **VORRICHTUNG ZUM ANTRIEB EINES SITZREINIGUNGSFÄHIGEN DOPPELSITZVENTILS**
DEVICE FOR DRIVING A DOUBLE SEAT VALVE CAPABLE OF SEAT CLEANING
DISPOSITIF D'ENTRAINEMENT D'UNE SOUPAPE A DOUBLE SIEGE PRESENTANT UNE FONCTION DE NETTOYAGE DU SIEGE

(30) Priorität: 16.01.2008 DE 102008004597
(43) Veröffentlichungstag der Anmeldung: 29.09.2010
(73) Patentinhaber: GEA Tuchenhagen GmbH, 21514 Büchen (DE)
(72) Erfinder: BURMESTER, Jens, 23883 Grambek (DE); SUEDEL, Matthias, 23626 Ratekau (DE)
(74) Vertreter: Hauck Patent- und Rechtsanwälte
(86) Internationale Anmeldenummer: PCT/EP2008/007918
(87) Internationale Veröffentlichungsnummer: WO 2009/089853

(56) Entgegenhaltungen:
- EP-A- 0 545 846
- DE-C1- 19 618 235

## Beschreibung

### TECHNISCHES GEBIET

Die Erfindung betrifft eine Vorrichtung zum Antrieb eines Doppelsitzventils mit zwei seriell angeordneten, relativ zueinander bewegbaren Schließgliedern, die in der Schließstellung des Doppelsitzventils das Überströmen von Fluiden von einem Ventilgehäuseteil in ein anderes durch eine diese Ventilgehäuseteile eines Ventilgehäuses miteinander verbindende Verbindungsöffnung verhindern und die sowohl in der Schließ- als auch in der Offenstellung des Doppelsitzventils einen Leckagehohlraum begrenzen, der mit der Umgebung des Doppelsitzventils verbunden ist. Das zweite Schließglied ist dabei im Durchmesser größer als das erste Schließglied ausgebildet, so dass demzufolge das Doppelsitzventil in Richtung des zweiten Schließgliedes öffnet, wobei einem Öffnen nach unten der Vorzug gegeben wird. Die Vorrichtung ist dazu bestimmt, die Öffnungs- und Schließbewegung der Schließglieder (volle Offenstellung H) zu erzeugen und darüber hinaus die Schließglieder in ihre jeweilige Sitzreinigungsstellung (Teiloffenstellungen T1, T2) zu überführen, um die den Schließgliedern zugeordneten koaxialen Sitzflächen zu spülen und zu reinigen. Die Verstellstangen der Schließglieder fassen teleskopartig ineinander und sind auf einer Seite aus dem Ventilgehäuse heraus-und in die Vorrichtung hineingeführt.

### STAND DER TECHNIK

Zur Generierung der Öffnungs- und Schließbewegung (volle Offenstellung H) eines Doppelsitzventils der in Rede stehenden Art dient eine sog. Hauptverstelleinrichtung und zur Erzeugung der Teiloffenstellungen T1 und T2 ist jeweils eine sog. Einzelverstelleinrichtung vorgesehen. Sind die Hauptverstelleinrichtung und die Einzelverstelleinrichtungen in einem gemeinsamen Antriebsgehäuse untergebracht, so spricht man von einer sog. "integrierten" Antriebsvorrichtung. Eine diesbezügliche Antriebsvorrichtung für Doppelsitzventile ist beispielweise in der EP 0 868 619 B1 oder der WO 20051093299 A1 beschrieben.

Aus der DE 31 33 273 C2 ist eine Antriebsvorrichtung für Doppelsitzventile bekannt, bei der die Einzelverstelleinrichtungen für die jeweilige Teiloffenstellung als jeweils eigenständige Verstelleinrichtung additiv zwischen Hauptverstelleinrichtung und einem Laternengehäuse eingefügt sind. Die Hauptverstelleinrichtung erzeugt ausschließlich den Vollhub für die volle Offenstellung. Die Addition der Einzelverstelleinrichtungen erfordert keine Änderung der angrenzenden Standardbauteile der Hauptverstelleinrichtung und des Laternengehäuses. Die mit diesem sog. "modularen" Antriebskonzept erzielbaren Vorteile bestehen insbesondere darin, dass ein weitestgehend standardisiertes Doppelsitzventil, das über einen Standardantrieb für die Erzeugung der vollen Offenstellung verfügt, durch additives Einfügen von relativ einfachen Einzelverstelleinrichtungen Sonderfunktionen erhält, wie die Erzeugung von Teiloffenstellungen der beiden Schließglieder.

Grundsätzlich wird zwischen nach unten (beispielsweise EP 0 646 741 A1) oder nach oben (beispielsweise DE 196 08 792 C2) öffnenden Doppelsitzventilen unterschieden.

Eine sog. lackagefrei schaltende Doppelventilanordnung, die wesentliche Merkmale des einleitend beschriebenen sitzreinigungsfähigen Doppelsitzventils aufweist, ist aus der EP 0 646 741 A1 bekannt. Dieses Doppelsitzventil besitzt zwei als Schieberkolben ausgebildete Schließglieder, es öffnet, bezogen auf eine vertikale Normallage, nach unten und die Drainage des Leckagehohlraumes erfolgt gleichfalls nach unten, und zwar über einen am unten liegenden Schließglied angeformten rohrförmigen Schaft, in dem eine Ablaufbohrung angeordnet und der nach unten aus dem Ventilgehäuse herausgeführt ist. Die beiden Schließglieder sind unabhängig voneinander jeweils durch einen der Öffnungsbewegung entgegengerichteten Teilhub in eine Spülstellung überführbar, in der das jeweilige Schließglied von seinem Ventilsitz frei ist und an einem mit Spülmitteldurchtritten versehenen Gehäuseanschlag anliegt. Die Spülmitteldurchtritte begrenzen dabei die Reinigungsmittelmenge bei der jeweiligen Sitzreinigung. Die Schließglieder werden über Ventilstangen betätigt, die beide nach oben aus einem Ventilgehäuse heraus- und in einen Antrieb hineingeführt sind. Um die Ausbaubarkeit des oben liegenden, kleineren und des unten liegenden, größeren Schließgliedes in einem Zuge nach oben zu ermöglichen, sind die Ventilsitze mit Dichtringen versehen, die von Gehäuseeinsätzen gehalten sind. Diese Gehäuseeinsätze sind von der dem rohrförmigen Schaft gegenüberliegenden Seite her in das Ventilgehäuse eingesetzt.

Bei dem Doppelsitzventil nach der EP 0 646 741 A1 ist von Vorteil, wie bei allen anderen Doppelsitzventilen, die nach unten öffnen und einen nach unten aus dem Ventilgehäuse herausgeführten Leckageablauf aufweisen, dass in der Offenstellung des Doppelsitzventils der Durchtrittsquerschnitt einer die beiden Ventilgehäuseteile miteinander verbindenden Verbindungsöffnung nicht durch den Querschnitt des Leckageablaufs eingeengt wird. Dies reduziert insbesondere dann die vom Durchtrittsquerschnitt der Verbindungsöffnung determinierte Nennweite des Ventilgehäuses um ein bis zwei Nennweiten, wenn, wie beispielsweise in den USA gefordert, der Durchtrittsquerschnitt des Leckageablaufs zwischen Leckagehohlraum und Umgebung des Doppelsitzventils gleich dem größten Durchtrittsquerschnitt der an das Doppelsitzventil angeschlossenen Rohrleitung sein muss.

Nachteilig ist bei dem Doppelsitzventil nach der EP 0 646 741 A1, dass dieses allenfalls leckagearm und nicht, wie der Titel zwar vorgibt, leckagefrei schaltet. Die Schaltleckage resultiert aus der Tatsache, dass bei jedem Öffnungs- oder Schließhub in dem Raum, der zwischen den beiden Sitzdichtungen einerseits ventilgehäuseseitig und andererseits schließgliedseitig begrenzet wird, Flüssigkeit eingeschlossen wird, und dass diese Flüssigkeit nach Trennung der beiden Schließglieder an der zwischen beiden wirksamen Mitteldichtung in den Leckagehohlraum und von dort in den Leckageablauf gelangt. Nachteilig ist weiterhin, dass die jeweilige Sitzreinigungsströmung, die durch die Spülmitteldurchtritte am zugeordneten Gehäuseanschlag gelangt und vorwiegend axial/radial orientiert ist, mehr oder weniger unkontrolliert und verwirbelt die in der Schließlage befindliche Sitzdichtung des anderen Schließgliedes beaufschlagt.

Mit dem Doppelsitzventil nach der EP 0 646 741 A1 lässt sich, wie gewünscht, die Reinigungsmittelmenge bei der jeweiligen Sitzreinigung limitieren. Die Forderungen, die an ein derartiges Doppelsitzventil in bestimmten Ländern gestellt werden, sind jedoch weitergehend. So wird beispielsweise in den USA gefordert, dass bei größeren Dichtungsdefekten oder gar dem Verlust einer der beiden Sitzdichtungen im Zuge der Sitzreinigung des anderen Schließgliedes über den jeweiligen Dichtungsdefekt bzw. den Sitzbereich ohne Sitzdichtung kein Reinigungsmittel hindurchtreten darf. Unter diesen Bedingungen stellt sich an ein derartiges Doppelsitzventil nicht nur die Forderung nach einer Begrenzung der Reinigungsmittelmenge und Vermeidung einer Direktbeaufschlagung der Sitzbereiche im Zuge der Sitzreinigung, sondern auch nach einer möglichst verwirbelungsfreien Abfuhr der Sitzreinigungsströmung zunächst in den Leckagehohlraum und von dort in die Umgebung, ohne dass der jeweils geschlossene Sitzbereich von dieser Sitzreinigungsströmung direkt angeströmt oder druckerhöhend beaufschlagt wird.

Unter Direktbeaufschlagung wird jede auf die den Sitzbereich begrenzenden Wandungen senkrecht gerichtete Geschwindigkeitskomponente aus der jeweiligen Sitzreinigungsströmung verstanden. Es hat sich nämlich gezeigt, dass jede diesbezügliche Direktbeaufschlagung zu einer Umwandlung kinetischer Strömungsenergie in statischen Druck führt. Abhängig von dem Auftreffwinkel der Strömung auf die angeströmte Wand- oder Körperfläche ergibt sich eine Verzweigungsströmung mit einer sog. "Verzweigungsstromlinie", wobei letztere die Strömung in zwei Hälften teilt. Die Verzweigungsstromlinie selbst läuft auf den sog. "Staupunkt" auf, so dass an dieser Stelle die Geschwindigkeit gleich Null ist. Der Druckzuwachs in Folge dieses Abstoppens der Geschwindigkeit erhält auch die Bezeichnung "Staudruck". Die vorstehend dargestellten druckerhöhenden Mechanismen generieren eine Leckageströmung über den jeweiligen Drosselspalt und die defekte oder die gänzlich nicht mehr vorhandene Sitzdichtung. Ein direktes Auftreffen der Sitzreinigungsströmung auf die den Leckagehohlraum begrenzenden Flächen ist daher in jedem Falle kontraproduktiv.

Ein, bezogen auf eine vertikale Normallage, nach oben öffnendes, sitzreinigungsfähiges Doppelsitzventil ist aus der DE 196 08 792 C2 bekannt. Bei diesem Doppelsitzventil kann die Reinigungsmittelmenge bei der jeweiligen Sitzreinigung durch sog. Drosselspalte kontrolliert und sehr eng bemessen werden. Darüber hinaus wird eine Direktbeaufschlagung der jeweils geschlossenen Sitzfläche im Zuge der Sitzreinigung der anderen Sitzfläche durch Führung und Lenkung der Sitzreinigungsströmungen verhindert.

Das Doppelsitzventil nach der DE 196 08 792 C2 verfügt über zwei sog. Sitzreinigungsstellungen, wobei die erste Sitzreinigungsstellung durch einen dem Öffnungshub entgegengerichteten ersten Teilhub erzeugt wird. In dieser Stellung bildet der leckageraumseitig am ersten Schließglied angeordnete zylindrische Ansatz mit der zugeordneten zylindrischen ersten Sitzfläche einen sog. Drosselspalt, über den die aus dem benachbarten ersten Ventilgehäuseteil herangeführte Reinigungsmittelmenge begrenzt werden kann. Die Sitzreinigungsstellung des zweiten Schließgliedes erfolgt durch einen dem Öffnungshub gleichgerichteten zweiten Teilhub, wobei in der Teiloffenstellung der leckageraumseitig am zweiten Schließglied angeordnete zylindrische Ansatz mit dem zugeordneten Teil der Verbindungsöffnung einen zweiten Drosselspalt bildet, der die in dieser Sitzreinigungsstellung erzeugte zweite Sitzreinigungsströmung mengenmäßig limitiert.

Da die beiden Schließglieder und die zugeordneten zylindrischen Ansätze unterschiedliche Durchmesser aufweisen, sind die jeweils zugeordneten Abschnitte der Verbindungsöffnung ebenfalls im Durchmesser unterschiedlich, so dass zwischen diesen beiden Durchmessern eine Übergangsfläche zustande kommt. Bei der Sitzreinigungsstellung des ersten Schließgliedes strömt die erste Sitzreinigungsströmung an der zylindrischen Sitzfläche entlang und trifft auf die stirnseitige Begrenzung am zweiten Schließglied, wobei durch den Durchmesserunterschied der beiden Abschnitte der Verbindungsöffnung zumindest ein direktes Auftreffen der ersten Sitzreinigungsströmung auf den zweiten Drosselspalt und damit den Sitzbereich des zweiten Schließgliedes verhindert wird. Bei der Sitzreinigungsstellung des zweiten Schließgliedes wird die zweite Sitzreinigungsströmung an der den Durchmesserunterschied zwischen den Abschnitten der Verbindungsöffnung überbrückenden Übergangsfläche radial nach innen umgelenkt und an der oberen stirnseitigen Begrenzungsfläche des ersten Schließgliedes vorbeigeführt. Auch in diesem Falle wird dadurch ein unmittelbares Auftreffen der zweiten Sitzreinigungsströmung auf den ersten Drosselspalt und damit den Sitzbereich des ersten Schließgliedes verhindert.

Aus der WO 2007/054131 A1 ist ein nach oben öffnendes, sitzreinigungsfähiges Doppelsitzventil bekannt, welches gegenüber dem vorstehend beschriebenen Stand der Technik unter anderem dahingehend verbessert ist, dass eine möglichst verwirbelungsfreie Ableitung der Sitzreinigungsströmung in den und aus dem Leckagehohlraum sichergestellt ist und eine druckerhöhende Direktbeaufschlagung der Sitzbereiche sicher vermieden wird. Dies wird u.a. durch eine Übergangsfläche zwischen den beiden Sitzflächen der Schließglieder und eine ringförmige Ausnehmung in Form einer speziellen Umlenkfläche im abhängig angetriebenen, größeren Schließglied erreicht. Zwischen den beiden Schließgliedern ist eine Mitteldichtung angeordnet, so dass auch bei dieser Schließgliedkonfiguration im strengen Sinne eher von einem leckagearmen als von einem leckagefreien Schalten gesprochen werden kann.

Aus der WO 2007/054134 A1 ist weiterhin ein gleichfalls nach oben öffnendes, sitzreinigungsfähiges Doppelsitzventil bekannt, welches gegenüber dem vorstehend beschriebenen Stand der Technik gemäß WO 2007/054131 A1 durch weitestgehend leckagefreies Schalten verbessert ist. Dies wird dadurch erreicht, dass das abhängig angetriebene, größere Schließglied an seinem dem unabhängig angetriebenen, kleineren Schließglied zugewandten Ende eine Ausnehmung mit einer im wesentlichen zylindrischen, mit der Sitzfläche des kleineren Schließgliedes fluchtenden Umfangswand besitzt und die Ausnehmung so dimensioniert ist, um während der Öffnungsbewegung einen Endabschnitt und eine radiale Dichtung des kleineren Schließgliedes dichtend aufzunehmen, bevor das größere Schließglied öffnet.

Die DE 196 18 235 C1 beschreibt ein nach unten öffnendes Doppelsitzventil gemäß dem Oberbegriff des Anspruchs 1 mit einem gesteuerten Leckageraum, das mit zwei Abdichtungsstellen ausgestattet ist, die seriell und in zueinander parallelen Ebenen angeordnet sind und in der Schließstellung des Doppelsitzventils das Überströmen von Fluiden von einem Ventilgehäuseteil in ein anderes verhindern. Der Leckageraum ist zwischen den Abdichtungsstellen angeordnet und ventilgehäuseseitig mit der Umgebung des Doppelsitzventils verbunden. Das Doppelsitzventil besitzt drei translatorisch verschiebliche, jeweils schieberartig ausgebildete Verschlussteile. Ein erstes Verschlussteil ist zwischen einer Schließ- und einer Offenstellung verschiebbar, wobei es in der geöffneten Stellung des Doppelsitzventils die Innenräume der beiden Ventilgehäuseteile über eine in ihm radial innenseits vorgesehene Durchtrittsöffnung miteinander verbindet. In der Schließstellung des Doppelsitzventils realisiert einerseits das vorg. erste Verschlussteil mit dem ersten Ventilgehäuseteil die erste Abdichtungsstelle. Ein zweites Verschlussteil bildet in der Schließstellung des Doppelsitzventils andererseits mit dem zweiten Ventilgehäuseteil die zweite Abdichtungsstelle. Ein drittes Verschlussteil wird in jeder anderen als in der geöffneten Stellung des Doppelsitzventils innerhalb der Durchtrittsöffnung dichtend verschoben und es kommt im Zuge der Öffnungsbewegung des Doppelsitzventils am zweiten Verschlussteil dichtend zur Anlage und wird mit diesem in die Offenstellung überführt.

Jedes der drei Verschlussteile besitzt eine Verstellstange, die in eine Vorrichtung zum Antrieb des Doppelsitzventils hineingeführt sind. Diese Antriebsvorrichtung hat die Aufgabe, mit einem einzigen druckmittelbeaufschlagten Antriebskolben, der gegen die Kraft diverser Federn verschieblich ist, die Öffnungs- und Schließbewegung des vorg. Doppelsitzventils mit den drei Verschlussteilen zu realisieren. Das Doppelsitzventil ist nicht sitzreinigungsfähig und somit verfügt die bekannte Antriebsvorrichtung auch über keine diesbezüglichen Antriebsmittel und Verstellfunktionen, um die zur jeweiligen Sitzreinigung notwendige Teilhubbewegung des ersten und des zweiten Verschlussteils zu generieren.

Es ist Aufgabe der vorliegenden Erfindung, eine möglichst einfache Vorrichtung zum Antrieb eines Doppelsitzventils zu schaffen, das sitzreinigungsfähig ist, nach unten öffnet und leckagefreie schaltet und das darüber hinaus bei der jeweiligen Sitzreinigung eine druckerhöhende Direktbeaufschlagung des geschlossenen Sitzbereichs vermeidet sowie eine möglichst verwirbelungsfreie Ableitung der Sitzreinigungsströmung in den und aus dem Leckagehohlraum sicherstellt.

### ZUSAMMENFASSUNG DER ERFINDUNG

Die Aufgabe wird durch eine Vorrichtung mit den Merkmalen des Anspruchs 1 gelöst. Vorteilhafte Ausgestaltungen der Vorrichtung gemäß der Erfindung sind in den Unteransprüchen beschrieben.

Zur Lösung der Aufgabe wird eine Vorrichtung vorgeschlagen, die die Schließgliedkinematik für ein Doppelsitzventil bereitstellt, das in einer bevorzugten Ausführungsform insgesamt mit all jenen Merkmalen ausgestattet ist, die in den vorstehend kurz umrissenen bekannten Doppelsitzventilen jeweils teilweise verwirklicht sind und die in der Summe folgende wünschenswerten Eigenschaften und Funktionen eines sitzreinigungsfähigen Doppelsitzventils, bezogen auf seine vertikale Normallage, generieren:
- zwei vorzugsweise als Schieberkolben ausgebildete, in Reihe geschaltete Schließglieder, deren jeweilige Sitzdichtung mit der zugeordneten, dann zwangsläufig zylindrischen Sitzfläche radial, d.h. im sog. Gleiteingriff, zusammenwirkt;
- leckagefrei schaltende Schließgliedgestaltung und -kinematik;
- Öffnungsbewegung des Doppelsitzventils nach unten;
- Drainage des Leckagehohlraumes nach unten;
- Betätigung der Schließglieder durch Verstellstangen, die gemeinsam nach oben aus dem Ventilgehäuse zu einem Antrieb herausgeführt sind;
- Ausbaubarkeit der beiden Schließglieder nach oben;
- kontrollierte Begrenzung der Reinigungsmittelmenge bei der Sitzreinigung vorzugsweise durch Drosselspalte;
- Vermeidung einer druckerhöhenden Direktbeaufschlagung des in der Schließlage befindlichen Sitzbereichs bei der jeweiligen Sitzreinigung;
- verwirbelungsfreie Ableitung der Sitzreinigungsströmung in den und aus dem Leckagehohlraum.

Erfindungsgemäß ist jedes der beiden Schließglieder und auch der Schieberteil über die zugeordnete Verstellstange mit einem Antriebskolben fest verbunden. Ein erster Lösungsgedanke besteht darin, dass die vorgeschlagene Vorrichtung einen mit der zweiten Verstellstange fest verbundenen, gegen die Kraft einer zweiten Feder verschieblichen, druckmittelbeaufschlagten zweiten Antriebskolben aufweist, sich die zweite Feder andererseits unmittelbar oder mittelbar am ersten Antriebskolben abstützt und die zweite Verstellstange durch die als Hohlstange ausgebildete erste Verstellstange in Verbindung mit dem ersten Antriebskolben dichtend hindurchgeführt ist. Dabei ist der zweite Antriebskolben gegenüber dem mit dem ersten Schließglied verbundenen ersten Antriebskolben axial begrenzt in beiden Richtungen und jeweils gegen die Kraft der zweiten Feder verschieblich. Diese besondere Eigenschaft des zweiten Antriebskolbens befähigt die Vorrichtung, die notwendige Kinematik für das zweite Schließglied im Zusammenhang mit der Öffnungs- und Schließbewegung, der zugeordneten Sitzreinigungsstellung sowie ggf. für eine sog. Abholstellung auf eine relativ einfache und überschaubare Weise bereitzustellen. Die Öffnungs- und Abholbewegung werden erfindungsgemäß dadurch initiiert, dass sich der erste und der zweite Antriebskolben, die einen von einem ersten Druckmittelstrom beaufschlagten ersten Druckmittelraum teilweise begrenzen, bei dieser Beaufschlagung voneinander entfernen.

Ein zweiter Lösungsgedanke baut auf der axialen Beweglichkeit des zweiten Antriebskolbens entsprechend dem ersten Lösungsgedanken auf und er besteht darin, dass die Vorrichtung einen druckmittelbeaufschlagen, vorzugsweise hülsenförmig ausgeführten vierten Antriebskolben aufweist, der den zweiten Antriebskolben an dessen Umfangsfläche dichtend umfasst und in Richtung des ersten Antriebskolbens zum Eingriff in eine Mitnahmeverbindung mit dem zweiten Antriebskolben verbringbar ist. Der zweite und der vierte Antriebskolben begrenzen auf ihrer dem ersten Antriebskolben abgewandten Stirnfläche teilweise einen von einem zweiten Druckmittelstrom beaufschlagten zweiten Druckmittelraum, und sie verschieben sich bei dieser Beaufschlagung jeweils in Richtung zum ersten Antriebskolben hin. Der vierte Antriebskolben hat dadurch einerseits im Zuge der Teilhubbewegung zur Sicherstellung der Sitzreinigungsstellung für das zweite Schließglied eine Mitnahmefunktion und einen diesen Teilhub betragsmäßig bestimmende Funktion gegenüber dem zweiten Schließglied bzw. dem zweiten Antriebskolben und andererseits bestimmt und begrenzt er durch seine Mitnahmefunktion im Bedarfsfall den dann gewünschten Abholhub gegenüber letzterem.

Falls leckagefreies Schalten gewünscht oder gefordert ist, kann die Vorrichtung gemäß einer bevorzugten Ausgestaltung so ausgelegt werden, dass sie in der Schließstellung des ersten Schließgliedes und im Zuge der Öffnungsbewegung des Doppelsitzventils das zweite Schließglied zunächst mit einem Abholhub an das erste Schließglied heranführt, indem bei Beaufschlagung mit dem ersten Druckmittelstrom der zweite Antriebskolben nach dem Abholhub an dem vierten Antriebskolben zur Anlage kommt. Leckagefreies Schalten wird weiterhin dadurch grundsätzlich befördert, indem, wie dies auch vorgesehen ist, der ringförmige Schieberteil, die erste, die zweite sowie die dritte Sitzfläche jeweils zylindrisch und die Schließglieder jeweils als Schieberkolben ausgeführt sind und die Vorrichtung die notwendige Kinematik für diese Ausgestaltung bereitstellt.

Beste Ergebnisse mit Blick auf leckagefreies Schalten werden gemäß einem weiteren Vorschlag dadurch erreicht, dass die Vorrichtung auch in der Lage ist, ein Doppelsitzventil zu betätigen, bei dem das zweite Schließglied an seinem dem ersten Schließglied zugewandten Ende eine Ausnehmung mit einer im Wesentlichen zylindrischen, mit der ersten Sitzfläche fluchtenden Umfangswand besitzt und die Ausnehmung so dimensioniert ist, um während der Öffnungsbewegung das erste Schließgliedes dichtend aufzunehmen, bevor das zweite Schließglied öffnet.

Die Begrenzung der Reinigungsmittelmenge bei der jeweiligen Sitzreinigung des Doppelsitzventils gelingt nach einem anderen Vorschlag dadurch, dass die Vorrichtung die Kinematik für ein Doppelsitzventil bereitstellt, das folgende Drosselspaltbildung aufweist:
- mit einem am zweiten Schließglied leckageraumseitig angeordneten zylindrischen zweiten Ansatz, der nach Vollzug des zweiten Teilhubs mit der zugeordneten zweiten Sitzfläche einen ringförmigen zweiten Drosselspalt bildet,
- mit einem am ersten Schließglied leckageraumabgewandt angeordneten zylindrischen ersten Ansatz, der nach Vollzug des ersten Teilhubs mit der zugeordneten ersten Sitzfläche einen ringförmigen ersten Drosselspalt bildet und
- mit einem am Schieberteil leckageraumseitig angeordneten zylindrischen dritten Ansatz, der nach Vollzug des ersten Teilhubs mit der zugeordneten dritten Sitzfläche einen ringförmigen dritten Drosselspalt bildet.

Die vorgeschlagene Vorrichtung ist auch in der Lage, ein Doppelsitzventil zu betätigen, bei dem bei der jeweiligen Sitzreinigung eine druckerhöhende Direktbeaufschlagung des geschlossenen Sitzbereichs vermieden sowie eine möglichst verwirbelungsfreie Ableitung der Sitzreinigungsströmung in den und aus dem Leckagehohlraum sichergestellt ist. Hierzu ist eine Übergangsfläche zwischen der zweiten und der dritten Sitzfläche vorgesehen und es ist in der dem Leckagehohlraum zugewandten Stirnseite des Schieberteils eine ringförmige zweite Ausnehmung in Form einer Umlenkfläche angeordnet.

Die vorgeschlagene Vorrichtung vereinfacht sich dadurch, dass der erste und der dritte druckmittelbeaufschlagte Antriebskolben, die jeweils gegen die Kraft einer Feder verschieblich sind, sich derselben Feder bedienen. Dies gelingt dadurch, dass das erste Gehäuse aus einem topfförmigen ersten und einem topfförmigen zweiten Gehäuseteil gebildet ist, dass der erste Antriebskolben in dem ersten und der dritte Antriebskolben in dem zweiten Gehäuseteil Aufnahme finden, dort jeweils umfangsseits dichtend geführt sind und zwischen sich die erste Feder aufnehmen.

Um das aus den beiden Gehäuseteilen bestehende, den ersten und den dritten Antriebskolben aufnehmende Gehäuse möglichst einfach auszubilden und herzustellen, ist ein Verbindungsring vorgesehen, der die Mantelflächen der Gehäuseteile innenseits zentriert und fügt, wobei die Verbindung zwischen den Gehäuseteilen und dem Verbindungsring bevorzugt stoffschlüssig ausgeführt ist.

Zur Aufnahme des zweiten und des diesen umfangsseits umschließenden vierten Antriebskolben ist ein topfförmiges zweites Gehäuse vorgesehen, das außenseits an einem ringförmigen Ansatz befestigt ist, der eine erste Durchtrittsöffnung an einem ersten Bodenteil des ersten Gehäuseteils umschließt. Über die erste Durchtrittsöffnung sind die jeweiligen Räume, die einerseits vom ersten Antriebskolben und andererseits vom zweiten und vierten Antriebskolben begrenzt sind, in vorteilhafter Weise zu dem vom ersten Druckmittelstrom beaufschlagten ersten Druckmittelraum miteinander verbunden.

Die vorgeschlagene Vorrichtung ermöglicht, gemäß einer weiteren Ausführungsform, die Detektierung der Schließ- und der Offenstellung sowie der Sitzreinigungsstellung nach Vollzug des zweiten Teilhubs. Zu diesem Zweck sind in einer mit einem Gehäuseboden des zweiten Gehäuses verbundenen Steuereinrichtung wenigstens drei Stellungsmelder angeordnet, wobei der Gehäuseboden eine zentrische dritte Durchtrittsöffnung aufweist, in der eine mit dem zweiten Antriebskolben fest verbundene, als Hohlstange ausgebildete und in die Steuereinrichtung eingreifende zweite Meldestange dichtend geführt ist. Letztere ist von einer mit dem ersten Antriebskolben mittelbar oder unmittelbar fest verbundenen und in die Steuereinrichtung eingreifenden ersten Meldestange durchdrungen. Dabei sind die die Schließ- und Offenstellung detektierenden Stellungsmelder der ersten Meldestange und der den zweiten Teilhub detektierende dritte Stellungsmelder der zweiten Meldestange zugeordnet.

Die gegenüber dem ersten Antriebskolben vorgesehene axial begrenzte, in beiden Richtungen und jeweils gegen die Kraft einer zweiten Feder vorgesehene Verschieblichkeit des zweiten Antriebskolbens wird gemäß einer vorteilhaften Ausführungsform dadurch erreicht, dass der erste Antriebskolben einen topfförmig ausgebildeten ersten Kolbenschaft aufweist, der im Bereich eines Topfbodens mit der ersten Verstellstange lösbar verbunden und dort von der zweiten Verstellstange dichtend durchdrungen ist, dass in einer im ersten Kolbenschaft von der offenen Seite her eingreifenden zentrischen, zylindrischen Ausnehmung die zweite Feder angeordnet ist, die sich unter Vorspannung einerseits am Topfboden über eine erste Widerlagerscheibe und andererseits über eine zweite Widerlagerscheibe am ersten Kolbenschaft abstützt, wobei die zweite Verstellstange die Widerlagerscheiben axial verschieblich durchdringt und in Richtung zur zweiten Feder hin jeweils zum Eingriff in eine Mitnahmeverbindung mit der in Frage kommenden Widerlagerscheibe verbringbar ist.

Obgleich der zweite Antriebskolben einer mechanischen Verlängerung der ersten, als Hohlstange ausgeführten und mit dem ersten Schließglied fest verbundenden Verstellstange in die Steuereinrichtung hinein im Wege steht, lässt sich die vorstehend erwähnte diesbezügliche Meldestange dadurch an den ersten Antriebskolben mittelbar oder unmittelbar fest anbinden, dass im Bereich des Austrittsendes des topfförmigen ersten Kolbenschaftes eine die zylindrische Ausnehmung diametral überbrückende Querstange vorgesehen ist, dass die Querstange dort einen mit dem zweiten Antriebskolben fest verbundenden, hülsenförmigen zweiten Kolbenschaft innerhalb einer langlochförmig ausgebildeten Querbohrung axial begrenzt verschieblich durchdringt, und dass die Querstange fest mit der ersten Meldestange verbunden ist.

Im Zuge der Abholbewegung beim Öffnungs- und Schließhub kommt nach einem definierten Abholhub der zweite am vierten Antriebskolben zur Anlage und im Zuge des zweiten Teilhubs gelangt der vierte Antriebskolben zum Eingriff in eine Mitnahmeverbindung mit dem zweiten Antriebskolben. Um diese Wirkungen des vierten Antriebskolbens sicherzustellen, schlägt die Erfindung vor, dass der hülsenförmige vierte Antriebskolben an seinem dem ersten Antriebskolben abgewandten Ende mit einem innenseitigen Rezess versehen ist, der zum einen die Mitnahmeverbindung mit dem und zum anderen eine zwölfte Anschlagfläche für den zweiten Antriebskolben bildet.

Um die erfindungsgemäß vorgesehene Reihenfolge der Schließgliedbewegungen im Zuge der Öffnungsbewegung, nämlich zunächst Abholhub, anschließend Einfahren des ersten Schließgliedes in die Ausnehmung im zweiten Schließglied und schließlich gemeinsame weitere Öffnungsbewegung bis zur vollen Offenstellung, oder bei der Schließbewegung sinngemäß in umgekehrter Reihenfolge sicherzustellen, ist die druckmittelbeaufschlagt wirksame Kolbenfläche des ersten Antriebskolbens größer als die druckmittelbeaufschlagt wirksame Kolbenfläche des zweiten Antriebskolbens ausgeführt und es ist die Vorspannkraft der ersten Feder größer als die Vorspannkraft der zweiten Feder ausgelegt. In diesem Zusammenhang wird eine vorteilhafte kompakte und eine hinreichend große Vorspannkraft bereitstellende erste Feder in Form eines Federpakets mit einer äußeren, einer mittleren sowie einer inneren Feder ausgebildet.

Die vorgeschlagene Vorrichtung besitzt drei voneinander unabhängige Druckmittelräume. Der erste Druckmittelraum ist von dem ersten und zweiten Gehäuse sowie dem ersten Antriebskolben einerseits und dem zweiten und dem vierten Antriebskolben andererseits begrenzt. Dabei mündet, wie dies ein erster Vorschlag vorsieht, in den ersten Druckmittelraum ein für den ersten Druckmittelstrom bestimmter erster Druckmittelkanal aus, wobei letzterer in einer das zweite Gehäuse durchdringenden Verlängerung des zweiten Antriebskolbens herangeführt ist. Nach einem zweiten Vorschlag mündet ein Ringkanal zwischen der zweiten Meldestange und der ersten Meldestange in den ersten Druckmittelraum aus und bildet somit den ersten Druckmittelkanal für den ersten Druckmittelstrom. Der zweite Druckmittelraum ist von dem zweiten Gehäuse einerseits sowie dem zweiten und dem vierten Antriebskolben andererseits und ein dritter Druckmittelraum ist von dem ersten Gehäuse einerseits sowie dem dritten Antriebskolben andererseits begrenzt. Der jeweils zugeordnete zweite und dritte Druckmittelkanal ist in an sich bekannter Weise über einen Anschluss am jeweils genannten Gehäuse herangeführt.

Zur Sicherstellung der Schließstellung des ersten Schließgliedes und zur Begrenzung der Offenstellung der beiden Schließglieder und des ersten sowie des zweiten Teilhubs sieht die Vorrichtung jeweils diskrete Anschläge vor, die in den Ansprüchen, den Figuren der Zeichnung sowie der zugeordneten Beschreibung näher beschrieben sind. Die Schließstellung des Schieberteils wird durch dessen Anlage an einer die erste und die zweite Sitzfläche überbrückenden Übergangsfläche im Sitzbereich des Doppelsitzventils sichergestellt.

Um auch den Vollzug des ersten Teilhubs zu detektieren, sieht eine weitere Ausführungsform vor, dass an einem das Ventilgehäuse mit dem ersten Gehäuse verbindenden Laternengehäuse ein vierter Stellungsmelder angeordnet ist, der die (den) mit dem Schieberteil verbundene(n) dritte Verstellstange (Verbindungssteg) detektiert.

### KURZBESCHREIBUNG DER ZEICHNUNGEN

Eine eingehendere Darstellung ergibt sich aus der folgenden Beschreibung und den beigefügten Figuren der Zeichnung sowie aus den Ansprüchen. Während die Erfindung in den verschiedensten Ausführungsformen realisiert ist, werden in der Zeichnung ein Ausführungsbeispiel einer bevorzugten Ausführungsform der vorgeschlagenen Vorrichtung zum Antrieb eines sitzreinigungsfähigen Doppelsitzventils sowie eine bevorzugte Ausführungsform des sitzreinigungsfähigen Doppelsitzventils selbst dargestellt und nachfolgend nach Aufbau und Funktion beschrieben unter der Voraussetzung, dass diese Ausführungsformen nur ein Beispiel für die Erfindung darstellen, nicht aber die Erfindung auf diese speziell dargestellten Beispiele beschränkt ist. Es zeigen
- **Figur 1**: im Längs- und Meridianschnitt das erfindungsgemäße sitzreinigungsfähige Doppelsitzventil unterhalb seines Antriebes, wobei sich das Doppelsitzventil in seiner Schließstellung befindet;
- **Figur 1a**: in vergrößerter Darstellung einen Längs- und Meridianschnitt im Sitzbereich und dem nach oben angrenzenden Bereich gemäß einer in **Figur 1** mit "A" gekennzeichneten Einzelheit;
- **Figur 2**: im Längs- und Meridianschnitt die erfindungsgemäße Vorrichtung zum Antrieb des sitzreinigungsfähigen Doppelsitzventils gemäß **Figur 1**, wobei untenseits ein angrenzendes Laternengehäuse und obenseits ein Teil einer Steuereinrichtung dargestellt sind und die Stellung der Vorrichtung mit der Schließstellung des Doppelsitzventils korrespondiert;
- **Figur 2a**: in vergrößerter Darstellung einen Längs- und Meridianschnitt im Sitzbereich und dem nach oben angrenzenden Bereich gemäß einer in **Figur 1** mit "A" gekennzeichneten Einzelheit, wobei die Stellung der Schließglieder und des Schieberteils die Stellung der Vorrichtung gemäß **Figur 2** bedingt;
- **Figur 3**: im Längs- und Meridianschnitt die erfindungsgemäße Vorrichtung gemäß **Figur 2**, wobei die Stellung der Vorrichtung mit einer sog. Abholstellung des unten liegenden zweiten Schließgliedes des Doppelsitzventils korrespondiert;
- **Figur 3a**: in vergrößerter Darstellung einen Längs- und Meridianschnitt im Sitzbereich und dem nach oben angrenzenden Bereich gemäß einer in **Figur 1** mit "**A**" gekennzeichneten Einzelheit, wobei die Stellung der Schließglieder und des Schieberteils die Stellung der Vorrichtung gemäß **Figur 3** bedingt;
- **Figur 4**: im Längs- und Meridianschnitt die erfindungsgemäße Vorrichtung gemäß **Figur 2**, wobei die Stellung der Vorrichtung mit der Offenstellung des Doppelsitzventils korrespondiert;
- **Figur 4a**: einen Längs- und Meridianschnitt im Sitzbereich und im Bereich der sich in ihrer Offenstellung befindlichen beiden Schließglieder, wobei die Stellung der Schließglieder und des Schieberteils die Stellung der Vorrichtung gemäß **Figur 4** bedingt;
- **Figur 5**: im Längs- und Meridianschnitt die erfindungsgemäße Vorrichtung gemäß **Figur 2**, wobei die Stellung der Vorrichtung mit einer sog. Sitzreinigungsstellung für das unten liegende, zweite Schließglied des Doppelsitzventils korrespondiert;
- **Figur 5a**: in vergrößerter Darstellung einen Längs- und Meridianschnitt im Sitzbereich und dem nach oben angrenzenden Bereich gemäß einer in **Figur 1** mit "**A**" gekennzeichneten Einzelheit, wobei die Stellung der Schließglieder und des Schieberteils die Stellung der Vorrichtung gemäß **Figur 5** bedingt;
- **Figur 6**: im Längs- und Meridianschnitt die erfindungsgemäße Vorrichtung gemäß **Figur 2**, wobei die Stellung der Vorrichtung mit einer sog. Sitzreinigungsstellung für das oben liegende, erste Schließglied des Doppelsitzventils korrespondiert;
- **Figur 6a**: in vergrößerter Darstellung einen Längs- und Meridianschnitt im Sitzbereich und dem nach oben angrenzenden Bereich gemäß einer in **Figur 1** mit "**A**" gekennzeichneten Einzelheit, wobei die Stellung der Schließglieder und des Schieberteils die Stellung der Vorrichtung gemäß **Figur 6** bedingt;

### DETAILLIERTE BESCHREIBUNG

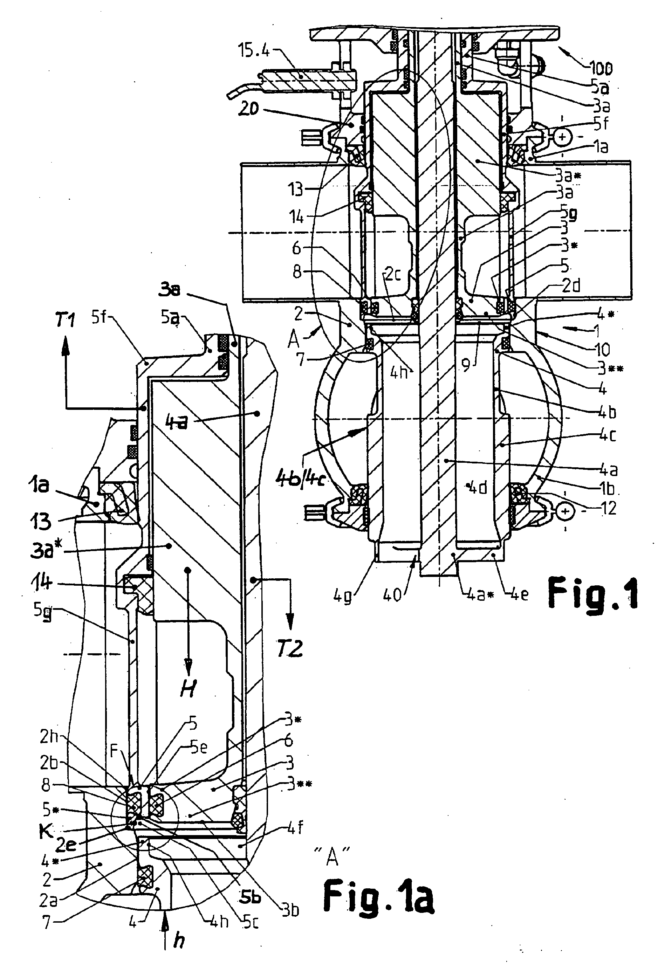

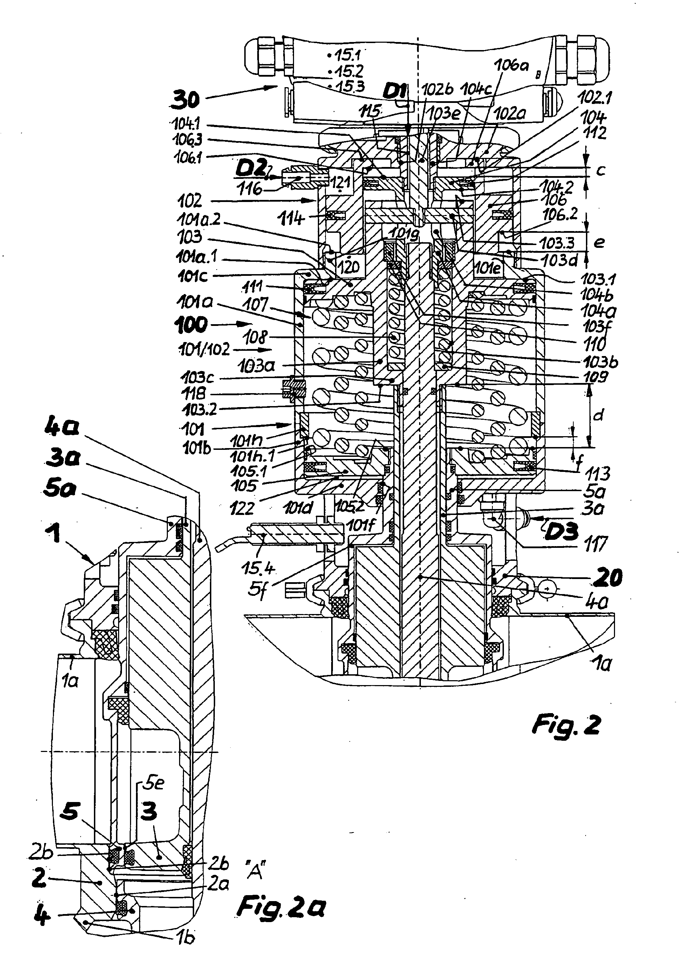

Ein in einer bevorzugten Ausführungsform ausgebildetes erfindungsgemäßes Doppelsitzventil 1 (**Figuren 1, 1a**), für dessen Antrieb eine Vorrichtung 100 (**Figur 2**) gemäß der Erfindung vorgesehen ist, besteht im Wesentlichen aus einem Ventilgehäuse 10 mit einem, bezogen auf seine vertikale Normallage, obenseitig angeordneten, ersten und einem darunter angeordneten, zweiten Ventilgehäuseteil 1 a, 1b, zwei unabhängig voneinander bewegbaren Schließgliedern 3 und 4 mit den jeweils zugeordneten Verstellstangen 3a bzw. 4a und einem ersten Sitzring 2, der über eine innenseitige Verbindungsöffnung 2c eine Verbindung zwischen den Ventilgehäuseteilen 1 a, 1 b herstellt.

Ein axial verschieblicher, zylindrischer ringförmiger Schieberteil 5 findet radial außenseits in einer im oberen Teil der Verbindungsöffnung 2c ausgebildeten zylindrischen dritten Sitzfläche 2b, die dort durch eine ringförmige erste Ausnehmung 2d gebildet ist, dichtend Aufnahme (**Figur 1a**), und der Schieberteil 5 bildet radial innenseits eine zylindrische erste Sitzfläche 5e aus, die koaxial zur Verbindungsöffnung 2c verläuft und mit letzterer fluiddurchlässig verbunden ist. Die außenseitige Abdichtung des Schieberteils 5 erfolgt über eine in diesem angeordnete, radial wirkende dritte Dichtung 8 (Dichtung im sog. Gleiteingriff).

Das als Schieberkolben ausgebildete, oben liegende, erste Schließglied 3 (aktives oder unabhängig angetriebenes Schließglied) findet in der Schließstellung des Doppelsitzventils 1 in der ersten Sitzfläche 5e dichtend Aufnahme. Hierzu ist in dem ersten Schließglied 3 eine erste Dichtung 6 vorgesehen, die ausschließlich durch radiale Vorspannung mit der ersten Sitzfläche 5e zusammenwirkt (radiale Dichtung im Gleiteingriff). Das ebenfalls als Schieberkolben ausgebildete, unten liegende, zweite Schließglied 4 (passives oder abhängig angetriebenes Schließglied) wirkt in der Schließstellung des Doppelsitzventils 1 mit einer zweiten Sitzfläche 2a zusammen, die zylindrisch ausgeführt und im unteren Teil der Verbindungsöffnung 2c ausgebildet ist. Die Abdichtung erfolgt über eine im zweiten Schließglied 4 angeordnete zweite Dichtung 7, die radial gegenüber der zweiten Sitzfläche 2a abdichtet (Dichtung im sog. Gleiteingriff).

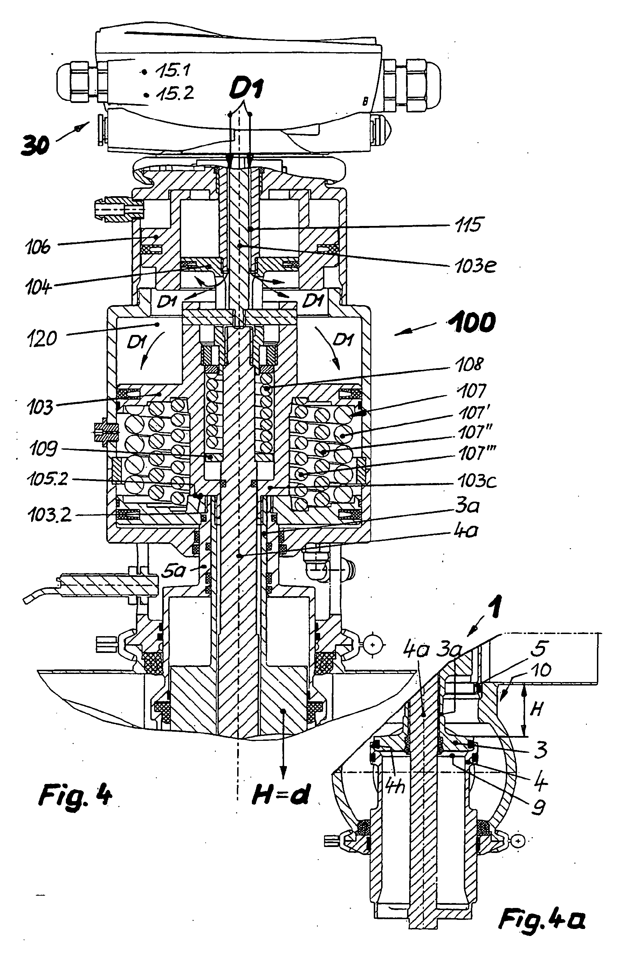

Die beiden Schließglieder 3, 4 bilden sowohl in der dargestellten Schließ- als auch in einer Offenstellung (s. auch **Figur 4a**) zwischen sich einen Leckagehohlraum 9, der über eine Ablaufbohrung 4d, die einen unterhalb am zweiten Schließglied 4 angeformten rohrförmigen Schaft 4b/4c zentrisch durchdringt, mit der Umgebung des Doppelsitzventils 1 verbunden ist. Der rohrförmige Schaft 4b/4c wird durch einen sich an das zweite Schließglied 4 anschließenden Verbindungsteil 4b und einen sich an letzterem fortsetzenden zweiten Druckausgleichskolben 4c gebildet.

Bei dem Doppelsitzventil 1 ist vorgesehen, die mechanisch notwendigen Verbindungsstellen zwischen dem zweiten Schließglied 4 und der zweiten Verstellstange 4a in Form von drei über den Umfang gleichmäßig verteilt angeordnete Traversen 4e (**Figur 1**), die die Ablaufbohrung 4d sternförmig und in radialer Richtung durchsetzen, ein Stück weit vom Leckagehohlraum 9 entfernt, vorzugsweise an das dem zweiten Schließglied 4 abgewandte Ende des zweiten Druckausgleichskolbens 4c hin, zu verlagern. Die feste Verbindung mit letzterem erfolgt über einen umlaufenden Ring 4g, mit dem die Traversen 4e radial außenseits fest verbunden sind. Zweckmäßig sind die Traversen 4e, der Ring 4g und ein Verstellstangenabschnitt 4a* in einem einstückigen Anschweißteil 40 zusammengefasst. Durch diese Anordnung werden negative Rückwirkungen auf die Strömungsverhältnisse und das Strömungsbild im Leckagehohlraum 9 vermieden.

Die zweite Sitzfläche 2a weist einen Durchmesser auf, der kleiner ist als der Durchmesser der dem Schieberteil 5 außenseits zugeordneten dritten Sitzfläche 2b, wobei eine Übergangsfläche 2e zwischen der zweiten und der dritten Sitzfläche 2a, 2b vorgesehen ist (**Figur 1a**).

Das in seiner Schließstellung in der ersten Sitzfläche 5e dichtend Aufnahme findende erste Schließglied 3 kommt im Zuge seiner Öffnungsbewegung am zweiten Schließglied 4 dichtend zur Anlage und überführt letzteres bei der weiteren Öffnungsbewegung gleichfalls in eine Offenstellung H (**Figur 4a**). Das erste Schließglied 3 weist an einem ersten Endabschnitt 3** (**Figur 1a**) die erste Dichtung 6 auf, die radial in der ersten Sitzfläche 5e abdichtet. Das zweite Schließglied 4 besitzt an seinem dem ersten Schließglied 3 zugewandten Ende eine Ausnehmung 4f mit einer im Wesentlichen zylindrischen, mit der ersten Sitzfläche 5e fluchtenden Umfangswand 4h, wobei die Ausnehmung 4f so dimensioniert ist, um während der Öffnungsbewegung den ersten Endabschnitt 3** und die radiale erste Dichtung 6 des ersten Schließgliedes 3 dichtend aufzunehmen, bevor das zweite Schließglied 4 öffnet.

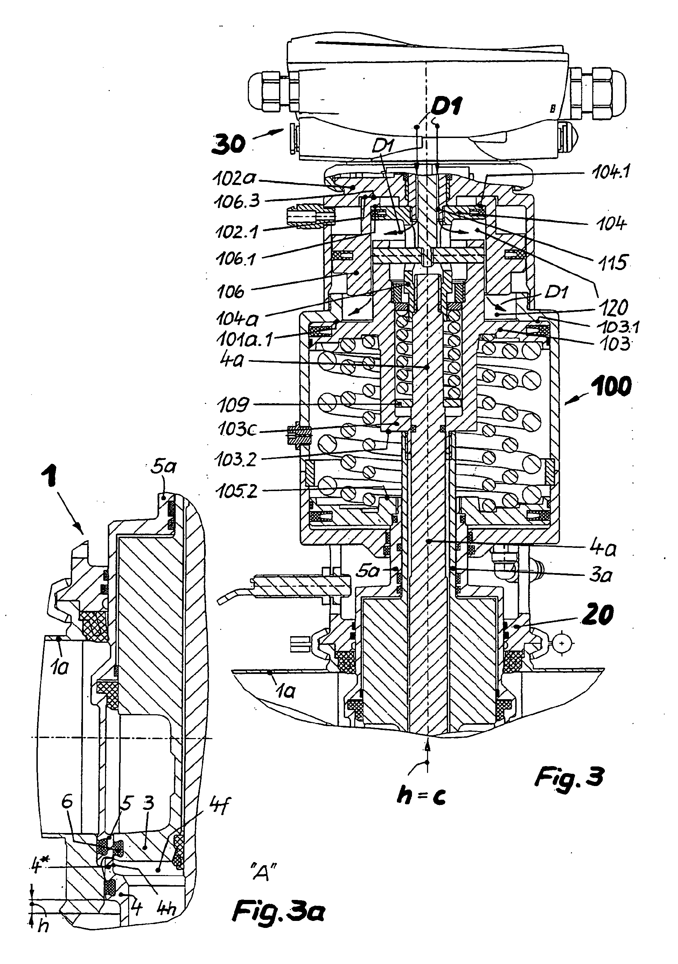

Das Doppelsitzventil 1 weist eine weitere Besonderheit auf, die bislang im Stand der Technik ohne Vorbild ist. Es handelt sich um eine sog. Abholstellung des zweiten Schließgliedes 4, bevor das unabhängig angetriebene erste Schließglied 3 seine Öffnungsbewegung mit dem Ziel, das Doppelsitzventil 1 aus seiner Schließ- in die volle Offenstellung H zu überführen, beginnt. Zu diesem Zweck (**Figur 3a**) wird das zweite Schließglied 4, entgegen seiner späteren Öffnungsbewegung, um einen Abholhub h mit der Stirnfläche eines zylindrischen zweiten Ansatzes 4* (**Figur 1a****,** **3a**) an den Schieberteil 5 herangeführt und kommt dort, unmittelbar an den Schieberteil 5 und das benachbarte erste Schließglied 3 angrenzend, zur Anlage. Mit dem Eingriffsbereich des zweiten Ansatzes 4* korrespondiert eine ringförmige zweite Ausnehmung 5c im Schieberteil 5, so dass der zylindrische zweite Ansatz 4* im Zuge der Abholbewegung in die zweite Ausnehmung 5c hineingefahren wird und dort am radial innenseitigen Ende der zweiten Ausnehmung 5c, dem letzten Abschnitt einer Kontur K einer Umlenkfläche 5b, zur Anlage gelangt. Nunmehr kann das erste Schließglied 3 seine erste Dichtung 6, ohne einen axialen, umlaufenden Spalt überbrücken zu müssen, unmittelbar in die mit der ersten Sitzfläche 5e fluchtende Umfangswand 4h und damit in die Ausnehmung 4f im zweiten Schließglied 4 hineinfahren.

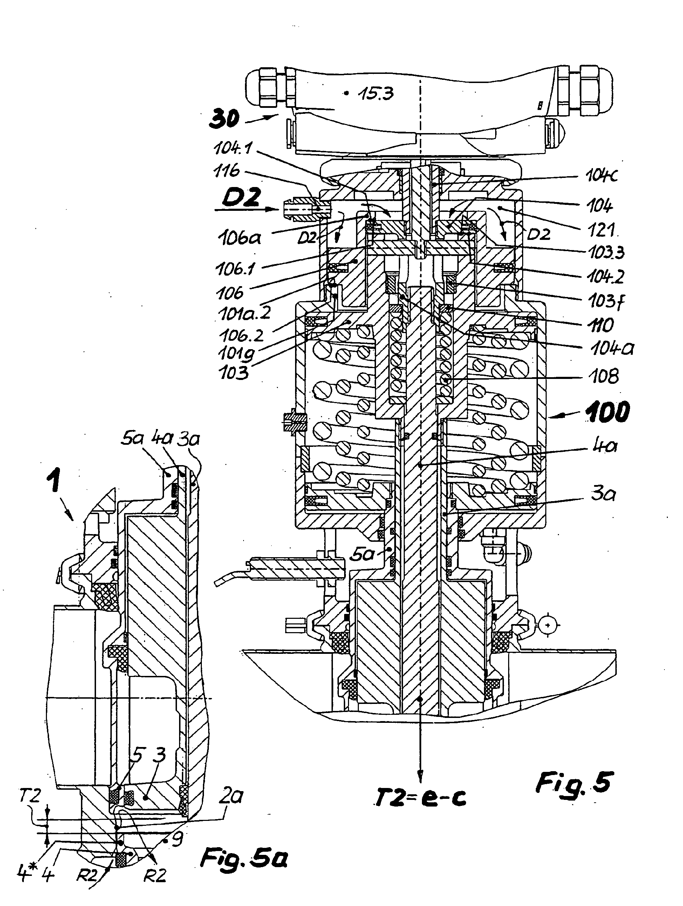

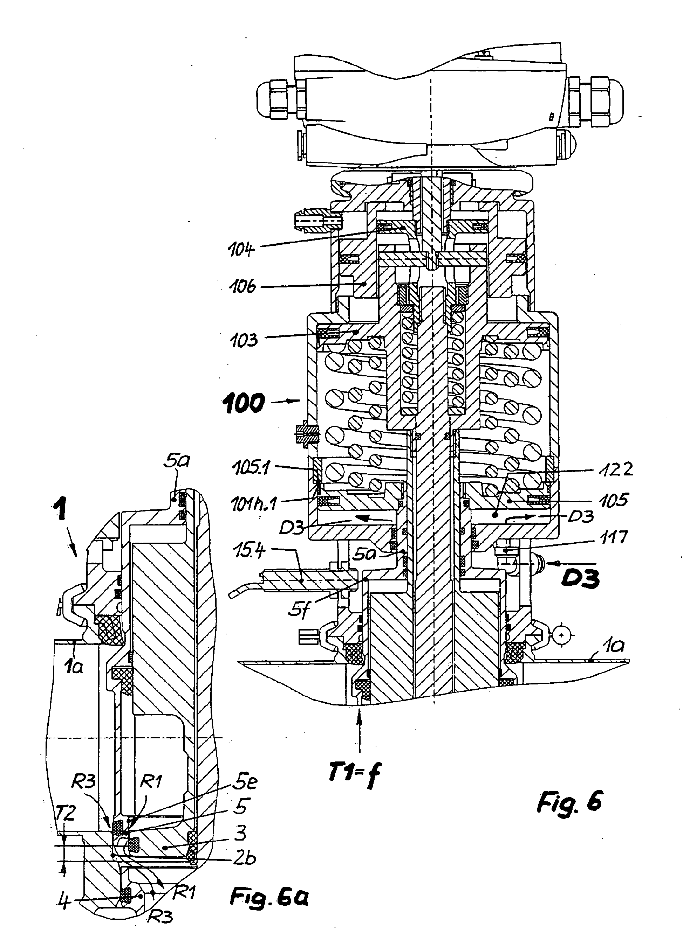

Das Doppelsitzventil 1 verfügt über Sitzreinigungsstellungen für die Schließglieder 3, 4 und den Schieberteil 5 zwecks Spülung ihrer koaxialen Sitzflächen 5e, 2a, 2b, wobei das zweite Schließglied 4 durch einen der Öffnungsbewegung gleichgerichteten zweiten Teilhub T2 (**Figur 5a**) und der Schieberteil 5 durch einen der Öffnungsbewegung entgegengerichteten ersten Teilhub T1 (**Figur 6a**) in seine jeweilige Sitzreinigungsstellung überführbar sind. Der leckageraumseitig am zweiten Schließglied 4 vorgesehene zylindrische zweite Ansatz 4* ist außenseitig mit einem zweiten Durchmesser ausgestattet (**Figuren 5a****,** **1a**), der nach Vollzug des zweiten Teilhubs T2 mit der zuordneten zweiten Sitzfläche 2a einen ringförmigen zweiten Drosselspalt bildet, durch den eine zweite Sitzreinigungsströmung R2 definiert begrenzt wird. Am ersten Schließglied 3 ist leckageraumabgewandt ein mit einem außenseitigen ersten Durchmesser bemessener zylindrischer erster Ansatz 3* angeordnet (**Figuren 6a****,** **1a**), der nach Vollzug des ersten Teilhubs T1 mit der zugeordneten ersten Sitzfläche 5e einen ringförmigen ersten Drosselspalt bildet, durch den eine erste Sitzreinigungsströmung R1 definiert begrenzt wird. Am Schieberteil 5 ist leckageraumseitig ein mit einem außenseitigen dritten Durchmesser bemessener zylindrischer dritter Ansatz 5* angeordnet (**Figuren 6a****,** **1a**), der nach Vollzug des ersten Teilhubs T1 mit der zugeordneten dritten Sitzfläche 2b einen ringförmigen dritten Drosselspalt bildet, durch den eine dritte Sitzreinigungsströmung R3 definiert begrenzt wird. Aus **Figur 1a** wird weiterhin deutlich, dass die dritte Sitzfläche 2b eine dichtungsschonende Einfahrschräge 2h für die dritte Dichtung 8 aufweist, wobei diese Einfahrschräge 2h wirksam ist, wenn der Schieberteil 5 aus seiner Sitzreinigungsstellung in seine Schließstellung zurückkehrt,

Die aus dem ersten Drosselspalt austretende erste Sitzreinigungsströmung R1 ist zum Einen durch die Lage des ersten Drosselspaltes und zum Anderen zur dritten Sitzreinigungsströmung R3 von vornherein so positioniert, dass die beiden Sitzreinigungsströmungen R1, R3 nicht auf den Sitzbereich der zweiten Dichtung 7 gerichtet sind. Darüber hinaus muss die radiale Breite der Übergangsfläche 2e auch die Realisierung einer ventilgehäuseseitigen Anschlagfläche (**Figur1** **a**) für den Schieberteil 5 sicherstellen, damit ein dem Leckagehohlraum 9 unmittelbar benachbarter fester (metallischer) Anschlag des Schieberteils 5 am ersten Sitzring 2 zu verwirklichen ist. Die ventilgehäuseseitige Anschlagfläche korrespondiert mit einer an der Stirnseite des zylindrischen dritten Ansatzes 5* vorgesehenen Anschlagfläche. In der dem Leckagehohlraum 9 zugewandten Stirnseite des Schieberteils 5 ist die ringförmige zweite Ausnehmung 5c in Form der Umlenkfläche 5b angeordnet (**Figur 1a**). In der Offenstellung des Doppelsitzventils (**Figur 4a**), wenn ein voller Öffnungshub H realisiert ist, wird deutlich, dass das in der Umfangswand 4h über seine erste Dichtung 6 radial dichtende erste Schließglied 3 für eine sichere Abdichtung der beiden Schließglieder 3, 4 zwischen dem Innenraum des Ventilgehäuses 10 einerseits und dem Leckagehohlraum 9 andererseits sorgt.

Das Doppelsitzventil 1 (**Figuren 1, 1a**) verfügt über die Vorrichtung 100 (**Figur 2**) zu seinem Antrieb, die oberhalb des ersten Ventilgehäuseteils 1a angeordnet und mit letzterem mittels eines Latemengehäuses 20 verbunden ist. Der Schieberteil 5 (**Figur 1a, 1**) ist über fluiddurchlässige Verbindungsstege 5g mit einem topfförmigen, zum Schieberteil 5 hin offenen Aufnahmezylinder 5f verbunden, der das zugeordnete erste Ventilgehäuseteil 1a verschieblich und über eine zweite Gehäusedichtung 13 abgedichtet durchdringt und sich an seinem dem Schieberteil 5 abgewandten Ende in die als Hohlstange ausgeführten dritten Verstellstange 5a fortsetzt, die in die Vorrichtung 100 hineingeführt ist. Die mit dem ersten Schließglied 3 verbundene, als Hohlstange ausgeführte und gleichfalls in die Vorrichtung 100 hineingeführte erste Verstellstange 3a durchdringt den Aufnahmezylinder 5f verschieblich und konzentrisch, sie ist an ihrer Eintrittsstelle in den Aufnahmezylinder 5f gegen diesen über eine Zylinderdichtung 14 abgedichtet und im Eingriffsbereich mit dem Aufnahmezylinder 5f als ein erster Druckausgleichskolben 3a* ausgebildet, dessen Außendurchmesser im Grenzfall bis an den Außendurchmesser des ersten Schließgliedes 3 heranreicht.

Die mit dem zweiten Schließglied 4 verbundene zweite Verstellstange 4a durchdringt die als Hohlstange ausgeführte erste Verstellstange 3a konzentrisch und ist in die Vorrichtung 100 hineingeführt. An dem der Vorrichtung 100 gegenüberliegenden Ende der zweiten Verstellstange 4a ist letztere vorzugsweise über das Anschweißteil 40 mit dem am zweiten Schließglied 4 angeformten rohrförmigen Schaft 4b/4c verbunden. Letzterer ist in seinem das zugeordnete zweite Ventilgehäuseteil 1b über eine erste Gehäusedichtung 12 dichtend durchdringenden Bereich in Form des zweiten Druckausgleichskolbens 4c ausgebildet, dessen Außendurchmesser im Grenzfall bis an den Außendurchmesser des zweiten Schließgliedes 4 heranreicht. Dabei kann aufgrund der Merkmale des Doppelsitzventils 1 die den zweiten Druckausgleichskolben 4c durchdringende Ablaufbohrung 4d so bemessen werden, dass ihr Durchtrittsquerschnitt dem Durchtrittsquerschnitt der größten an die Ventilgehäuseteile 1a, 1b angeschlossenen Rohrleitung gleich ist.

In einem in **Figur 2** teilweise dargestellten Steuerkopf 30, der auf der dem Doppelsitzventil 1 abgewandten Seite der Vorrichtung 100 angeordnet ist, sind ein erster und ein zweiter Stellungsmelder 15.1, 15.2 für das Detektieren der Schließund der Offenstellung sowie ein dritter Stellungsmelder 15.3, mit dem der zweite Teilhub T2 des zweiten Schließgliedes 4 detektiert wir, angeordnet. Die Stellung des Schieberteils 5 wird über einen vierten Stellungsmelder 15.4 erfasst, der vorzugsweise den mit dem Schieberteil 5 verbundenen, aus dem ersten Ventilgehäuseteil 1a herausgeführten und zwischen dem ersten Ventilgehäuseteil 1a und der Vorrichtung 100 angeordneten Aufnahmezylinder 5f detektiert.

Die erfindungsgemäße Vorrichtung 100 (Antriebsvorrichtung), die in **Figur 2** in einer Lage dargestellt ist, die aus der Schließstellung des Doppelsitzventils 1 resultiert, weist, bezogen auf die vertikale Normallage, innerhalb eines im unteren Bereich angeordneten ersten Gehäuses 101, das aus einem topfförmigen ersten und einem topfförmigen zweiten Gehäuseteil 101 a, 101 b gebildet ist, einen mit der ersten Verstellstange 3a fest verbundenen topfförmigen ersten Antriebskolben 103 und einen mit der dritten Verstellstange 5a fest verbundenen dritten Antriebskolben 105 auf. Die als Hohlstange ausgebildete dritte Verstellstange 5a in Verbindung mit dem dritten Antriebskoben 105 ist von der ersten Verstellstange 3a dichtend durchdrungen. Die Antriebskolben 103, 105 nehmen zwischen sich eine erste Feder 107 auf, sie sind druckmittelbeaufschlagt und gegen die Kraft der vorgespannten Feder 107 verschieblich, wobei letztere vorzugsweise als Federpaket mit einer äußeren 107', einer mittleren 107" sowie einer inneren Feder 107"' ausgebildet ist (**Figur 4**). Der erste Antriebskolben 103 findet in dem ersten Gehäuseteil 101a Aufnahme und ist dort umfangsseits mittels einer ersten Kolbendichtung 111 dichtend geführt. Der dritte Antriebskolben 105 findet in dem zweiten Gehäuseteil 101 b Aufnahme und ist dort umfangsseits mittels einer dritten Kolbendichtung 113 dichtend geführt. Ein erster Bodenteil 101c des ersten Gehäuseteils 101 a besitzt eine zentrische Durchtrittsöffnung 101 e und ein zweiter Bodenteil 101 d des zweiten Gehäuseteils 101 b besitzt eine zweite Durchtrittsöffnung 101f. Ein Verbindungsring 101h zentriert und fügt die innenseitigen Mantelflächen der Gehäuseteile 101a, 101b, wobei die Verbindung zwischen letzteren vorzugsweise stoffschlüssig ist. Der erste Bodenteil 101 c weist einen die erste Durchtrittsöffnung 101 e umschließenden, vom zweiten Bodenteil 101 d axial fortschreitenden ringförmigen Ansatz 101g auf, über den außenseits eine lösbare Verbindung mit einem topfförmigen zweiten Gehäuse 102 besteht. Ein Be- und Entlüftungsstopfen 118, der vorzugsweise oberhalb des Verbindungsringes 101 h im ersten Gehäuseteil 101 a angeordnet ist, sorgt während der Hubbewegungen der Antriebskolben 103, 105 für eine Be- und Entlüftung des zwischen diesen befindlichen Raumes.

Das zweite Gehäuse 102 weist einen mit der zweiten Verstellstange 4a fest verbundenen, gegen die Kraft einer zweiten Feder 108 verschieblichen, druckmittelbeaufschlagten zweiten Antriebskolben 104 auf, wobei sich die zweite Feder 108 andererseits unmittelbar oder mittelbar am ersten Antriebskolben 103 abstützt und die zweite Verstellstange 4a durch die als Hohlstange ausgebildete erste Verstellstange 3a in Verbindung mit dem ersten Antriebskolben 103 dichtend hindurchgeführt ist. Im zweiten Gehäuse 102 ist weiterhin ein druckmittelbeaufschlagter und vorzugsweise hülsenförmig ausgebildeter vierter Antriebskolben 106 angeordnet, der in dem zweiten Gehäuse 102 mittels einer vierten Kolbendichtung 114 dichtend geführt ist und der den zweiten Antriebskolben 104 an dessen Umfangsfläche, die eine zweite Kolbendichtung 112 aufnimmt, dichtend umfasst und in Richtung des ersten Antriebskolbens 103 zum Eingriff in eine Mitnahmeverbindung mit dem zweiten Antriebskolben 104 verbringbar ist. Der vierte Antriebskolben 106 ist an seinem dem ersten Antriebskolben 103 abgewandten Ende mit einem innenseitigen Rezess 106a versehen ist, der zum einen die Mitnahmeverbindung mit dem und zum anderen eine zwölfte Anschlagfläche 106.1 für den zweiten Antriebskolben 104 bildet.

Der zweite Antriebskolben 104 ist gegenüber dem ersten Antriebskolben 103 axial begrenzt in beiden Richtungen und jeweils gegen die Kraft der zweiten Feder 108 verschieblich. Diese Verschieblichkeit wird dadurch erreicht, dass der erste Antriebskolben 103 einen topfförmig ausgebildeten ersten Kolbenschaft 103a aufweist, der im Bereich eines Topfbodens 103c mit der ersten Verstellstange 3a lösbar verbunden und dort von der zweiten Verstellstange 4a dichtend durchdrungen ist. In einer im ersten Kolbenschaft 103a von der offenen Seite her eingreifenden zentrischen, zylindrischen Ausnehmung 103b ist die zweite Feder 108 angeordnet, die sich unter Vorspannung einerseits am Topfboden 103c über eine erste Widerlagerscheibe 109 und andererseits über eine zweite Widerlagerscheibe 110 am ersten Kolbenschaft 103a abstützt, wobei die zweite Verstellstange 4a die Widerlagerscheiben 109, 110 axial verschieblich durchdringt und in Richtung zur zweiten Feder 108 hin jeweils zum Eingriff in eine Mitnahmeverbindung mit der in Frage kommenden Widerlagerscheibe 109, 110 verbringbar ist. In das offene Ende der zylindrischen Ausnehmung 103b ist ein Befestigungsring 103f eingeschraubt, der das Widerlager für die obere, zweite Widerlagerscheibe 110 bildet und die Vorspannung der zweiten Feder 108 sicherstellt.

Im Bereich des Austrittsendes des topfförmigen ersten Kolbenschaftes 103a ist eine die zylindrische Ausnehmung 103b diametral überbrückende Querstange 103d vorgesehen, die dort einen mit dem zweiten Antriebskolben 104 fest verbundenden, hülsenförmigen zweiten Kolbenschaft 104a innerhalb einer langlochförmig ausgebildeten Querbohrung 104b axial begrenzt verschieblich durchdringt und fest mit einer ersten Meldestange 103e verbunden ist.

Ein Gehäuseboden 102a des zweiten Gehäuses 102 ist mit der Steuereinrichtung 30 verbunden, wobei der Gehäuseboden 102a eine zentrische dritte Durchtrittsöffnung 102b aufweist, in der eine mit dem zweiten Antriebskolben 104 fest verbundene, als Hohlstange ausgebildete und in die Steuereinrichtung 30 eingreifende zweite Meldestange 104c dichtend geführt ist. Letztere ist von der mit dem ersten Antriebskolben 103 mittelbar oder unmittelbar fest verbundenen und in die Steuereinrichtung 30 eingreifenden ersten Meldestange 103e durchdrungen und bildet mit dieser einen Ringkanal 115. Die Trennung des Gehäuses 101/102 in das gekapselte erste Gehäuse 101 und das von letzterem lösbare zwei Gehäuse 102 erlaubt in Verbindung mit dem vorstehend beschriebenen inneren Aufbau des zweiten Gehäuses 102 eine Demontage aller Antriebsteile des zweiten Gehäuses 102 nach oben, wobei die Verstellstangen 3a, 4a und 5a jeweils von unten in das erste Gehäuse 101 eingeschraubt werden.

Ein erster Druckmittelraum 120 ist von dem Gehäuse 101/102 sowie dem ersten Antriebskolben 103 einerseits und den zweiten und vierten Antriebskolben 104, 106 andererseits begrenzt. Dabei mündet der Ringkanal 115 zwischen der zweiten Meldestange 104c und der ersten Meldestange 103e in den ersten Druckmittelraum 120 aus und er wird als ein erster Druckmittelkanal 115 für einen ersten Druckmittelstrom D1 verwendet. Ein zweiter Druckmittelraum 121 ist von dem zweiten Gehäuse 102 einerseits sowie dem zweiten und dem vierten Antriebskolben 104, 106 andererseits begrenzt. Dabei mündet in den zweiten Druckmittelraum 121 ein für einen zweiten Druckmittelstrom D2 bestimmter zweiter Druckmittelkanal 116 aus, und letzterer ist über einen Anschluss am zweiten Gehäuse 102 herangeführt. Ein dritter Druckmittelraum 122 ist von dem zweiten Gehäuseteil 101 b des ersten Gehäuses 101 einerseits sowie dem dritten Antriebskolben 105 andererseits begrenzt. Dabei mündet in den dritten Druckmittelraum 122 ein für einen dritten Druckmittelstrom D3 bestimmter dritter Druckmittelkanal 117 aus, und letzterer ist über einen Anschluss am ersten Gehäuseteil 101b herangeführt.

Bei der Beaufschlagung des ersten Druckmittelraumes 120 über den ersten Druckmittelkanal 115 mit dem ersten Druckmittelstrom D1 zur Einleitung der Öffnungsbewegung des Doppelsitzventils 1 (**Figuren 3, 3a**) entfernen sich die Antriebskolben 103, 104, relativ gesehen, voneinander, wobei zunächst der zweite Antriebskolben 104 gegen die Vorspannkraft der zweiten Feder 108 nach oben bis zur Anlage seiner achten Anschlagfläche 104.1 an der zwölften Anschlagfläche 106.1 am vierten Antriebskolben 106 verschoben wird und sich erst anschließend der erste Antriebskolben 103 mit seiner fünften Anschlagfläche 103.1 von einer ersten Anschlagfläche 101 a.1 am ersten Bodenteil 101 c löst und nach unten verschiebt, bis nach Vollzug des vollen Öffnungshubes H seine sechste Anschlagfläche 103.2 an einer elften Anschlagfläche 105.2 am dritten Antriebskolben 105 zur Anlage kommt (**Figuren 4, 4a**). Die Aufwärtsbewegung des zweiten Antriebskolbens 104, die einen sog. "Abholhub h" darstellt, bildet sich beispielsweise über den Abstand zwischen dem Topfboden 103c und der ersten Widerlagerscheibe 109 ab. Während des Abholhubes h bleibt der vierte Antriebskolben 106 andauernd mit seiner vierzehnten Anschlagfläche 106.3 an einer vierten Anschlagfläche 102.1 am Gehäuseboden 102a festgelegt. Durch diesen Bewegungsvorgang werden die Schließglieder 3, 4 zunächst um den Abholhub h einander angenähert (**Figur 3a**), anschließend ineinander gefahren, wobei das erste Schließglied 3 in der im zweiten Schließglied 4 angeordneten Ausnehmung 4f Aufnahme findet, dann mit der aus der Vorspannkraft der zweiten Feder 108 resultierenden Kraft gegeneinander gefahren und schließlich gemeinsam in die volle Offenstellung H überführt (**Figuren 4, 4a**). Der Abholhub h führt im Zuge der Öffnungsbewegung das zweite Schließglied 4 zunächst entgegen dem späteren Öffnungshub H unmittelbar an das erste Schließglied 3 heran, so dass letzteres mit seiner ersten Dichtung 6 in die Umfangswand 4h der Ausnehmung 4f einfahren kann, ohne einen axialen Spalt überbrücken zu müssen. Dadurch wird leckagefreies Schalten sichergestellt.

Bei der Beaufschlagung des zweiten Druckmittelraumes 121 über den zweiten Druckmittelkanal 116 mit dem zweiten Druckmittelstrom D2 (**Figuren 5, 5a**) zur Erzeugung des die Sitzreinigung des zweiten Schließgliedes 4 sicherstellenden zweiten Teilhubs T2 verschieben sich die Antriebskolben 104, 106 jeweils in Richtung zum ersten Antriebskolben 103 hin, bis der vierte Antriebskolben 106 mit seiner dreizehnten Anschlagfläche 106.2 an einer zweiten Anschlagfläche 101 a.2 am stirnseitigen Ende des ringförmigen Ansatzes 101g zur Anlage kommt. Dabei nimmt die zwölfte Anschlagfläche 106.1 am innenseitigen Rezess 106a den zweiten Antriebskolben 104 nach unten mit, wobei letzterer auch allein unter der Wirkung des zweiten Druckmittelstromes D2 in diese Richtung verschoben wird und untenseits mit seiner neunten Anschlagfläche 104.2 an einer siebten Anschlagfläche 103.3, die sich am stirnseitigen Ende des ersten Kolbenschaftes 103a befindet, zur Anlage kommt. Letztlich ist der zweite Antriebskolben 104 mit seinen beiden stirnseitigen Anschlagflächen 104.1 und 104.2 zwischen den Anschlagflächen 106.1 und 103.3 festgelegt, wodurch das zweite Schließglied 4 um den zweiten Teilhub T2 nach unten verschoben wird, während das erste Schließglied 3 in seiner Schließstellung verbleibt. Die den zweiten Teilhub T2 erzeugende Abwärtsbewegung des zweiten Antriebskolbens 104 bildet sich beispielsweise über den Abstand zwischen dem Befestigungsring 103f und der zweiten Widerlagerscheibe 110 ab. Durch den zweiten Teilhub T2 wird die zweite Sitzfläche 2a spaltweit freigelegt (**Figur 5a**) und die in dem zweiten Drosselspalt, der zwischen dem zylindrischen zweiten Ansatz 4* am zweiten Schließglied 4 und der zweiten Sitzfläche 2a gebildet ist (s. auch **Figur 1a**), limitierte zweite Sitzreinigungsströmung R2 wird aus dem angrenzenden zweiten Ventilgehäuseteil 1 b in den Leckagehohlraum 9 herangeführt und reinigt dadurch die ventilgehäuse- und schließgliedseitig freigelegten Flächen.

Bei der Beaufschlagung des dritten Druckmittelraumes 122 über den dritten Druckmittelraum 117 mit dem dritten Druckmittelstrom D3 (**Figuren 6, 6a**) zur Erzeugung des die Sitzreinigung des ersten Schließgliedes 3 und des Schieberteils 5 sicherstellenden ersten Teilhubs T1 verschiebt sich der dritte Antriebskolben 105 in Richtung zum ersten Antriebskolben 103 hin, bis er mit seiner zehnten Anschlagfläche 105.1 an einer dritten Anschlagfläche 101 h.1 am Verbindungsring 101 h zur Anlage kommt. Dadurch ist der erste Teilhub T1 des Schieberteils 5 vollzogen, während das erste Schließglied 3 sowie das zweite Schließglied 4 jeweils unverrückt in einer Lage verbleiben, die der jeweiligen Schließstellung entspricht (**Figuren 2, 2a**). Durch den ersten Teilhub T1 werden die erste Sitzfläche 5e sowie die dritte Sitzfläche 2b spaltweit freigelegt (**Figur 6a**). Dadurch wird zum Einen die in dem ersten Drosselspalt, der zwischen dem zylindrischen ersten Ansatz 3* am ersten Schließglied 3 und der ersten Sitzfläche 5e gebildet ist (s. auch **Figur 1a**), limitierte erste Sitzreinigungsströmung R1 aus dem angrenzenden zweiten Ventilgehäuseteil 1a in den Leckagehohlraum 9 herangeführt. Weiterhin wird zum Anderen die in dem dritten Drosselspalt, der zwischen dem zylindrischen dritten Ansatz 5* am Schieberteil 5 und der dritten Sitzfläche 2b gebildet ist, limitierte dritte Sitzreinigungsströmung R3 aus dem angrenzenden zweiten Ventilgehäuseteil 1a in den Leckagehohlraum 9 herangeführt. Die Sitzreinigungsströmungen R1, R3 reinigen dadurch die ventilgehäuse-, schließglied- und schieberteilseitig freigelegten Flächen.

Der Abholhub h, der volle Öffnungshub H, der erste Teilhub T1 sowie der zweite Teilhub T2 werden in der in **Figur 2** dargestellten Schließstellung des Doppelsitzventils 1 jeweils durch den folgenden zwischen zugeordneten Anschlagflächen vorgesehenen Abstand (Abholweg c; Öffnungsweg d; erster Teilhubweg f; zweiter Teilhubweg (e-c)) bestimmt:
- **Abholhub h:**: Abstand c zwischen der zwölften Anschlagfläche 106.1 und der achten Anschlagfläche 104.1 (**h = c**);
- **voller Öffnungshub H:**: Abstand d zwischen der sechsten Anschlagfläche 103.2 und der elften Anschlagfläche 105.2 (**H = d**);
- **erster Teilhub T1:**: Abstand f zwischen der dritten Anschlagfläche 101h.1 und der zehnten Anschlagfläche 105.1 (**T1 = f**);
- **zweiter Teilhub T2:**: Abstand e zwischen der dreizehnten Anschlagfläche 106.2 und der zweiten Anschlagfläche 101 a.2 abzüglich des Abstandes c zwischen der zwölften Anschlagfläche 106.1 und der achten Anschlagfläche 104.1 (**T2 = e - c**).

Aus dem oben Genannten wird verständlich, dass verschiedene Modifikationen und Varianten realisiert werden können, ohne vom Geist und dem neuen Konzept der vorliegenden Erfindung abzuweichen. Dies ist so zu verstehen, dass keine Beschränkung auf die Ausführungsformen beabsichtigt ist, welche hier dargestellt und beschrieben oder nur beschrieben worden sind. Die Offenbarung soll alle solchen Modifikationen umfassen, die sich innerhalb des von den Ansprüchen beanspruchten Schutzumfangs befinden.

### BEZUGSZEICHENLISTE DER VERWENDETEN ABKÜRZUNGEN

### Figuren 1, 1a, 2a, 3a, 4a, 5a, 6

(Doppelsitzventil gemäß Aktenzeichen: DE 10 2008 004 597.7-12)
- 1: Doppelsitzventil
- 10: Ventilgehäuse
- 1 a: erster Ventilgehäuseteil
- 1 b: zweiter Ventilgehäuseteil

- 2: erster Sitzring
- 2a: zweite Sitzfläche (zylindrische Sitzfläche)
- 2b: dritte Sitzfläche (zylindrische Sitzfläche)
- 2c: Verbindungsöffnung
- 2d: ringförmige erste Ausnehmung
- 2e: Übergangsfläche
- 2h: zweite Einfahrschräge

- 3: erstes Schließglied (erster Schieberkolben)
- 3*: zylindrischer erster Ansatz
- 3**: erster Endabschnitt
- 3a: erste Verstellstange
- 3a*: erster Druckausgleichskolben

- 4: zweites Schließglied (zweiter Schieberkolben)
- 4*: zylindrischer zweiter Ansatz
- 4a: zweite Verstellstange
- 4b/4c: rohrförmiger Schaft
- 4b: Verbindungsteil
- 4c: zweiter Druckausgleichskolben
- 4d: Ablaufbohrung
- 4f: Ausnehmung
- 4h: (zylindrische) Umfangswand

- 40: Anschweißteil
- 4a*: Verstellstangenabschnitt
- 4e: Traverse
- 4g: Ring

- 5: ringförmiger Schieberteil
- 5*: zylindrischer dritter Ansatz
- 5a: dritte Verstellstange
- 5b: Umlenkfläche
- 5c: ringförmige zweite Ausnehmung
- 5e: erste Sitzfläche (zylindrische Sitzfläche)
- 5f: Aufnahmezylinder
- 5g: Verbindungssteg

- 6: erste Dichtung (radial)
- 7: zweite Dichtung (radial)
- 8: dritte Dichtung (radial, im Schieberteil 5)
- 9: Leckagehohlraum
- 10: (Ventilgehäuse)
- 12: erste Gehäusedichtung
- 13: zweite Gehäusedichtung
- 14: Zylinderdichtung
- 15.4: vierter Stellungsmelder

- h: Abholhub

- H: voller Öffnungshub (volle Offenstellung)
- K: Kontur der Umlenkfläche 5b

- R1: erste Sitzreinigungsströmung
- R2: zweite Sitzreinigungsströmung
- R3: dritte Sitzreinigungsströmung

- T1: erster Teilhub (erste Teiloffenstellung/erste Sitzreinigungsstellung)
- T2: zweiter Teilhub (zweite Teiloffenstellung/zweite Sitzreinigungsstellung)

### Figuren 2, 3, 4, 5 und 6

- 15.1: erster Stellungsmelder
- 15.2: zweiter Stellungsmelder
- 15.3: dritter Stellungsmelder

- 20: Laternengehäuse
- 30: Steuereinrichtung

- 100: Vorrichtung (Antriebsvorrichtung)
- 101/102: Gehäuse (Antriebsvorrichtung)

- 101: erstes Gehäuse
- 101 a: (topfförmiges) erstes Gehäuseteil
- 101 a.1: erste Anschlagfläche (/103.1)
- 101 a.2: zweite Anschlagfläche (/106.2)
- 101 b: (topfförmiges) zweites Gehäuseteil
- 101 c: erster Bodenteil
- 101d: zweiter Bodenteil
- 101 e: erste Durchtrittsöffnung
- 101f: zweite Durchtrittsöffnung
- 101 g: ringförmiger Ansatz

- 101 h: Verbindungsring
- 101h.1: dritte Anschlagfläche

- 102: zweites Gehäuse
- 102.1: vierte Anschlagfläche (/106.3)
- 102a: Gehäuseboden
- 102b: dritte Durchtrittsöffnung
- 103: (topfförmiger) erster Antriebskolben
- 103.1: fünfte Anschlagfläche (/101 a.1
- 103.2: sechste Anschlagfläche (/105.2
- 103.3: siebte Anschlagfläche (/104.2
- 103a: (topfförmiger) erster Kolbenschaft
- 103b: zylindrische Ausnehmung
- 103c: Topfboden
- 103d: Querstange
- 103e: erste Meldestange
- 103f: Befestigungsring

- 104: zweiter Antriebskolben
- 104.1: achte Anschlagfläche (/106.1
- 104.2: neunte Anschlagfläche (/103.3
- 104a: hülsenförmiger zweiter Kolbenschaft
- 104b: (langlochförmige) Querbohrung
- 104c: zweite Meldestange

- 105: dritter Antriebskolben
- 105.1: zehnte Anschlagfläche (/101 d.1
- 105.2: elfte Anschlagfläche (/103.2

- 106: (hülsenförmiger) vierter Antriebskolben
- 106.1: zwölfte Anschlagfläche (/104.1 )
- 106.2: dreizehnte Anschlagfläche (/101a.2)
- 106.3: vierzehnte Anschlagfläche (/102.1)
- 106a: innenseitiger Rezess

- 107: erste Feder (Federpaket)
- 107': äußere Feder
- 107": mittlere Feder
- 107"': innere Feder
- 108: zweite Feder
- 109: erste Widerlagerscheibe
- 110: zweite Widerlagerscheibe
- 111: erste Kolbendichtung
- 112: zweite Kolbendichtung
- 113: dritte Kolbendichtung
- 114: vierte Kolbendichtung
- 115: erster Druckmittelkanal (Ringkanal)
- 116: zweiter Druckmittelkanal
- 117: dritter Druckmittelkanal
- 118: Be- und Entlüftungsstopfen

- 120: erster Druckmittelraum
- 121: zweiter Druckmittelraum
- 122: dritter Druckmittelraum

- c: Abholweg (c = h)
- d: voller Öffnungshub (d = H)
- e: zweiter Teilhubweg (T2 = e - c)
- f: erster Teilhubweg (T1 = f)

- D1: erster Druckmittelstrom
- D2: zweiter Druckmittelstrom
- D3: dritter Druckmittelstrom

## Patentansprüche

1. Vorrichtung (100) zum Antrieb eines Doppelsitzventils (1) mit zwei seriell angeordneten, relativ zueinander bewegbaren Schließgliedern (3, 4), die in der Schließstellung des Doppelsitzventils (1) das Überströmen von Fluiden von einem Ventilgehäuseteil (1 a; 1 b) in ein anderes (1 b; 1 a) durch eine diese Ventilgehäuseteile (1a, 1b) eines Ventilgehäuses (10) miteinander verbindende Verbindungsöffnung (2c) verhindern und die sowohl in der Schließ- als auch in der Offenstellung des Doppelsitzventils (1) einen Leckagehohlraum (9) begrenzen, der mit der Umgebung des Doppelsitzventils (1) verbunden ist, mit einem axial verschieblichen, ringförmigen Schieberteil (5), der sowohl in der Schließ- als auch in der Offenstellung des Doppelsitzventils (1) radial außenseits in einer in der Verbindungsöffnung (2c) ausgebildeten dritten Sitzfläche (2b) dichtend Aufnahme findet und innenseits eine erste Sitzfläche (5e) ausbildet, die koaxial zur Verbindungsöffnung (2c) verläuft und mit letzterer fluiddurchlässig verbunden ist, wobei in der Schließstellung das erste Schließglied (3) in der ersten Sitzfläche (5e) dichtend Aufnahme findet und im Zuge seiner durch die Vorrichtung (100) erzeugten Öffnungsbewegung am zweiten Schließglied (4), das einer in der Verbindungsöffnung (2c) ausgeführten zweiten Sitzfläche (2a) zugeordnet und im Durchmesser größer als das erste Schließglied (3) ausgeführt ist, dichtend zur Anlage kommt und letzteres bei der weiteren Öffnungsbewegung gleichfalls in eine Offenstellung (H) überführt wird, mit jeweils durch die Vorrichtung (100) erzeugten Sitzreinigungsstellungen für die Schließglieder (3, 4) und den Schieberteil (5) zwecks Spülung ihrer koaxialen Sitzflächen (5e, 2a, 2b), wobei das zweite Schließglied (4) durch einen der Öffnungsbewegung gleichgerichteten zweiten Teilhub (T2) und der Schieberteil (5) durch einen der Öffnungsbewegung entgegengerichteten ersten Teilhub (T1) in seine jeweilige Sitzreinigungsstellung überführbar sind, mit teleskopartig ineinander fassenden, auf der Seite des ersten Schließgliedes (3) aus dem Ventilgehäuse (10) nach außen heraus- und in die Vorrichtung (100) hineingeführten Verstellstangen (3a, 4a, 5a), wobei die erste Verstellstange (3a) dem ersten Schließglied (3), die zweite Verstellstange (4a) dem zweiten Schließglied (4) und die dritte Verstellstange (5a) dem Schieberteil (5) zugeordnet sind, **dadurch gekennzeichnet, dass** die Vorrichtung (100) innerhalb eines Gehäuses (101/102)
• einen mit der ersten Verstellstange (3a) fest verbundenen, gegen die Kraft einer ersten Feder (107) verschieblichen, druckmittelbeaufschlagten topfförmigen ersten Antriebskolben (103) aufweist,
• einen mit der zweiten Verstellstange (4a) fest verbundenen, gegen die Kraft einer zweiten Feder (108) verschieblichen, druckmittelbeaufschlagten zweiten Antriebskolben (104) aufweist, sich die zweite Feder (108) andererseits unmittelbar oder mittelbar am ersten Antriebskolben (103) abstützt und die zweite Verstellstange (4a) durch die als Hohlstange ausgebildete erste Verstellstange (3a) in Verbindung mit dem ersten Antriebskolben (103) dichtend hindurchgeführt ist,
• einen druckmittelbeaufschlagen, hülsenförmigen vierten Antriebskolben (106) aufweist, der den zweiten Antriebskolben (104) an dessen Umfangsfläche dichtend umfasst und in Richtung des ersten Antriebskolbens (103) zum Eingriff in eine Mitnahmeverbindung mit dem zweiten Antriebskolben (104) verbringbar ist,
• sowie einen mit der dritten Verstellstange (5a) fest verbundenen, gegen die Kraft der ersten Feder (107) verschieblichen, druckmittelbeaufschlagten dritten Antriebskolben (105) aufweist und die als Hohlstange ausgebildete dritte Verstellstange (5a) in Verbindung mit dem dritten Antriebskolben (105) von der ersten Verstellstange (3a) dichtend durchdrungen ist,
wobei der zweite Antriebskolben (104) gegenüber dem ersten Antriebskolben (103) axial begrenzt in beiden Richtungen und jeweils gegen die Kraft der zweiten Feder (108) verschieblich ist,
wobei der erste und der zweite Antriebskolben (103, 104) einen von einem ersten Druckmittelstrom (D1) beaufschlagten ersten Druckmittelraum (120) teilweise begrenzen und sich dabei voneinander entfernen,
und wobei der zweite und der vierte Antriebskolben (104, 106) mit ihrer jeweils dem ersten Antriebskolben (103) abgewandten Stirnfläche einen von einem zweiten Druckmittelstrom (D2) beaufschlagten zweiten Druckmittelraum (121) teilweise begrenzen und sich dabei in Richtung zum ersten Antriebskolben (103) hin jeweils verschieben.

2. Vorrichtung nach Anspruch 1,
**dadurch gekennzeichnet,**
**dass** die Vorrichtung (100) in der Schließstellung des ersten Schließgliedes (3) und im Zuge der Öffnungsbewegung des Doppelsitzventils (1) das zweite Schließglied (4) zunächst mit einem Abholhub (h) an das erste Schließglied (3) heranführt, indem bei Beaufschlagung mit dem ersten Druckmittelstrom (D1) der zweite Antriebskolben (104) nach dem Abholhub (h) an dem vierten Antriebskolben (106) zur Anlage kommt.

3. Vorrichtung nach Anspruch 1 oder 2,
**dadurch gekennzeichnet,**
**dass** die Vorrichtung (100) das Doppelsitzventil (1) betätigt, bei dem der ringförmige Schieberteil (5), die erste, die zweite sowie die dritte Sitzfläche (5e, 2a, 2b) jeweils zylindrisch und die Schließglieder (3, 4) jeweils als Schieberkolben ausgeführt sind.

4. Vorrichtung nach einem der Ansprüche 1 bis 3,
**dadurch gekennzeichnet,**
**dass** die Vorrichtung (100) das Doppelsitzventil (1) betätigt, bei dem das zweite Schließglied (4) an seinem dem ersten Schließglied (3) zugewandten Ende eine Ausnehmung (4f) mit einer im Wesentlichen zylindrischen, mit der ersten Sitzfläche (5e) fluchtenden Umfangswand (4h) besitzt und die Ausnehmung (4f) so dimensioniert ist, um während der Öffnungsbewegung das erste Schließgliedes (3) dichtend aufzunehmen, bevor das zweite Schließglied (4) öffnet.

5. Vorrichtung nach einem der Ansprüche 1 bis 4,
**dadurch gekennzeichnet,**
**dass** die Vorrichtung (100) das Doppelsitzventil (1) betätigt, und zwar mit einem am zweiten Schließglied (4) leckageraumseitig angeordneten zylindrischen zweiten Ansatz (4*), der nach Vollzug des zweiten Teilhubs (T2) mit der zugeordneten zweiten Sitzfläche (2a) einen ringförmigen zweiten Drosselspalt bildet, mit einem am ersten Schließglied (3) leckageraumabgewandt angeordneten zylindrischen ersten Ansatz (3*), der nach Vollzug des ersten Teilhubs (T1) mit der zugeordneten ersten Sitzfläche (5e) einen ringförmigen ersten Drosselspalt bildet und mit einem am Schieberteil (5) leckageraumseitig angeordneten zylindrischen dritten Ansatz (5*), der nach Vollzug des ersten Teilhubs (T1) mit der zugeordneten dritten Sitzfläche (2b) einen ringförmigen dritten Drosselspalt bildet.

6. Vorrichtung nach einem der Ansprüche 1 bis 5,
**dadurch gekennzeichnet,**
**dass** die Vorrichtung (100) das Doppelsitzventil (1) betätigt, bei dem eine Übergangsfläche (2e) zwischen der zweiten und der dritten Sitzfläche (2a, 2b) vorgesehen ist und bei dem in der dem Leckagehohlraum (9) zugewandten Stirnseite des Schieberteils (5) eine ringförmige zweite Ausnehmung (5c) in Form einer Umlenkfläche (5b) angeordnet ist.

7. Vorrichtung nach einem der Ansprüche 1 bis 6,
**dadurch gekennzeichnet,**
**dass** das erste Gehäuse (101) aus einem topfförmigen ersten und einem topfförmigen zweiten Gehäuseteil (101 a, 101b) gebildet ist, dass der erste Antriebskolben (103) in dem ersten (101a) und der dritte Antriebskolben (105) in dem zweiten Gehäuseteil (101 b) Aufnahme finden, dort jeweils umfangsseits dichtend geführt sind und zwischen sich die erste Feder (107) aufnehmen, und dass ein erster Bodenteil (101c) des ersten Gehäuseteils (101a) eine zentrische erste Durchtrittsöffnung (101e) und ein zweiter Bodenteil (101d) des zweiten Gehäuseteils (101b) eine zentrische zweite Durchtrittsöffnung (101f) besitzen.

8. Vorrichtung nach Anspruch 7,
**dadurch gekennzeichnet,**
**dass** ein Verbindungsring (101h) vorgesehen ist, der die Mantelflächen der Gehäuseteile (101a, 101b) innenseits zentriert und fügt, und dass die Verbindung zwischen den Gehäuseteilen (101 a, 101b) und dem Verbindungsring (101h) stoffschlüssig ist.

9. Vorrichtung nach Anspruch 7 oder 8,
**dadurch gekennzeichnet,**
**dass** der erste Bodenteil (101c) einen die erste Durchtrittsöffnung (101e) umschließenden, vom zweiten Bodenteil (101d) axial fortstrebenden ringförmigen Ansatz (101g) aufweist, über den außenseits eine lösbare Verbindung mit dem topfförmigen zweiten Gehäuse (102) besteht.

10. Vorrichtung nach Anspruch 9,
**dadurch gekennzeichnet,**
**dass** ein Gehäuseboden (102a) des zweiten Gehäuses (102) mit einer Steuereinrichtung (30) verbunden ist, wobei der Gehäuseboden (102a) eine zentrische dritte Durchtrittsöffnung (102b) aufweist, in der eine mit dem zweiten Antriebskolben (104) fest verbundene, als Hohlstange ausgebildete und in die Steuereinrichtung (30) eingreifende zweite Meldestange (104c) dichtend geführt ist, wobei letztere von einer mit dem ersten Antriebskolben (103) mittelbar oder unmittelbar fest verbundene und in die Steuereinrichtung (30) eingreifende erste Meldestange (103e) durchdrungen ist.

11. Vorrichtung nach einem der Ansprüche 1 bis 10,
**dadurch gekennzeichnet,**
**dass** der erste Antriebskolben (103) einen topfförmig ausgebildeten ersten Kolbenschaft (103a) aufweist, der im Bereich eines Topfbodens (103c) mit der ersten Verstellstange (3a) lösbar verbunden und dort von der zweiten Verstellstange (4a) dichtend durchdrungen ist, dass in einer im ersten Kolbenschaft (103a) von der offenen Seite her eingreifenden zentrischen, zylindrischen Ausnehmung (103b) die zweite Feder (108) angeordnet ist, die sich unter Vorspannung einerseits am Topfboden (103c) über eine erste Widerlagerscheibe (109) und andererseits über eine zweite Widerlagerscheibe (110) am ersten Kolbenschaft (103a) abstützt, wobei die zweite Verstellstange (4a) die Widerlagerscheiben (109, 110) axial verschieblich durchdringt und in Richtung zur zweiten Feder (108) hin jeweils zum Eingriff in eine Mitnahmeverbindung mit der in Frage kommenden Widerlagerscheibe (109, 110) verbringbar ist.

12. Vorrichtung nach Anspruch 10 oder 11,
**dadurch gekennzeichnet,**
**dass** im Bereich des Austrittsendes des topfförmigen ersten Kolbenschaftes (103a) eine die zylindrische Ausnehmung (103b) diametral überbrückende Querstange (103d) vorgesehen ist, dass die Querstange (103d) dort einen mit dem zweiten Antriebskolben (104) fest verbundenden, hülsenförmigen zweiten Kolbenschaft (104a) innerhalb einer langlochförmig ausgebildeten Querbohrung (104b) axial begrenzt verschieblich durchdringt, und dass die Querstange (103d) fest mit der ersten Meldestange (103e) verbunden ist.

13. Vorrichtung nach einem der Ansprüche 1 bis 12,
**dadurch gekennzeichnet,**
**dass** der hülsenförmige vierte Antriebskolben (106) an seinem dem ersten Antriebskolben (103) abgewandten Ende mit einem innenseitigen Rezess (106a) versehen ist, der zum einen die Mitnahmeverbindung mit dem und zum anderen eine zwölfte Anschlagfläche (106.1) für den zweiten Antriebskolben (104) bildet.

14. Vorrichtung nach einem der Ansprüche 1 bis 13,
**dadurch gekennzeichnet,**
**dass** die druckmittelbeaufschlagt wirksame Kolbenfläche des ersten Antriebskolbens (103) größer als die druckmittelbeaufschlagt wirksame Kolbenfläche des zweiten Antriebskolbens (104) ist.

15. Vorrichtung nach einem der Ansprüche 1 bis 14,
**dadurch gekennzeichnet,**
**dass** der erste Druckmittelraum (120) von dem Gehäuse (101/102) sowie dem ersten Antriebskolben (103) einerseits und dem zweiten und dem vierten Antriebskolben (104, 106) andererseits begrenzt ist.

16. Vorrichtung nach Anspruch 15,
**dadurch gekennzeichnet,**
**dass** in den ersten Druckmittelraum (120) ein für den ersten Druckmittelstrom (D1) bestimmter erster Druckmittelkanal (115) ausmündet, wobei letzterer in einer das zweite Gehäuse (102) durchdringenden Verlängerung des zweiten Antriebskolbens (104) herangeführt ist.

17. Vorrichtung nach einem der Ansprüche 1 bis 16,
**dadurch gekennzeichnet,**
**dass** der zweite Druckmittelraum (121) von dem zweiten Gehäuse (102) einerseits sowie dem zweiten und dem vierten Antriebskolben (104, 106) andererseits begrenzt ist.

18. Vorrichtung nach einem der Ansprüche 1 bis 17,
**dadurch gekennzeichnet,**
**dass** ein dritter Druckmittelraum (122) von dem ersten Gehäuse (101) einerseits sowie dem dritten Antriebskolben (105) andererseits begrenzt ist.

19. Vorrichtung nach einem der Ansprüche 1 bis 18,
**dadurch gekennzeichnet,**
**dass** zur Begrenzung des zweiten Teilhubs (T2) der vierte Antriebskolben (106) mit einer dreizehnten Anschlagfläche (106.2) an einer am ersten Gehäuse (101) ausgebildeten zweiten Anschlagfläche (101a.2) anliegt.

20. Vorrichtung nach einem der Ansprüche 1 bis 19,
**dadurch gekennzeichnet,**
**dass** zur Begrenzung des ersten Teilhubs (T1) der dritte Antriebskolben (105) mit einer zehnten Anschlagfläche (105.1) an einer am ersten Gehäuse (101) ausgebildeten dritten Anschlagfläche (101h.1) anliegt.

21. Vorrichtung nach einem der Ansprüche 1 bis 20,
**dadurch gekennzeichnet,**
**dass** zur Sicherstellung der Schließstellung des Schieberteils (5) letzterer an der die erste und die zweite Sitzfläche (2a, 2b) überbrückende Übergangsfläche (2e) anliegt.

## Claims

1. Device (100) for driving a double seat valve (1) with two closing elements (3, 4), arranged in series and displaceable with respect to each other, which in the closed position of the double seat valve (1) prevent the overflow of fluids from one valve housing part (1a; 1b) into another one (1b; 1a) through a connection opening (2c) connecting these valve housing parts (1, 1b) of a valve housing (10) with each other, and which in the closed position as well as in the open position of the double seat valve (1) limit a leakage cavity (9) that is connected to the surroundings of the double seat valve (1), with an axially displaceable, annular slide part (5), which in the closed position as well as in the open position of the double seat valve (1) is sealingly received radially at the outer side in a third seating area (2b) formed in the connection opening (2c) and which at the inner side forms a first seating area (5e) which runs coaxially to the connection opening (2c) and is in fluid communication connected with the latter, wherein in the closed position, the first closing element (3) is sealingly received in the first seating area (5e) and during its opening movement generated by the device (100) sealingly abuts the second closing element (4), which is associated to a second seating area (2a) realised in the connection opening (2c) and which is realised greater in diameter than the first closing element (3), and the latter is also transferred into an open position (H) in the further opening movement, with seat cleaning positions for the closing elements (3, 4) and the slide part (5), each generated by the device (100) for rinsing their coaxial seating areas (5e, 2a, 2b), wherein the second closing element (4) is adapted to be transferred into its respective seat cleaning position by a second partial stroke (T2) in the direction of the opening movement, and the slide part by a first partial stroke (T1) directed opposite to the opening movement, with telescopically interlacing displacement rods (3a, 4a, 5a) guided outwardly out of the valve housing (10) and into the device (100) at the side of the first closing element (3), wherein the first displacement rod (3a) is associated to the first closing element (3), the second displacement rod (4a) to the second closing element (4) and the third displacement rod (5a) to the slide part (5), **characterized in that** the device (100) comprises inside a housing (101/102)
• a pot-shaped first drive piston (103), pressurised by pressure medium and fixedly connected to the first displacement rod (3a) and displaceable against the force of a first spring (107)
• a second drive piston (104), pressurised by pressure medium and fixedly connected to the second displacement rod (4a) and displaceable against the force of a second spring (108), the second spring (108) being supported at the other side directly or indirectly on the first drive piston (103), and the second displacement rod (4a) being sealingly guided through the first displacement rod (3a) which is realised as a hollow rod in connection with the first drive piston (103),
• a sleeve-shaped fourth drive piston (106) pressurised by pressure medium, which sealingly embraces the second drive piston (104) on the circumference surface thereof and is adapted to be brought into engagement in a catching connection with the second drive piston (104) in the direction of the first drive piston (103),
• and a third drive piston (105) pressurised by pressure medium and fixedly connected to the third displacement rod (5a) and displaceable against the force of the first spring (107), the third displacement rod (5a), realised as a hollow rod in connection with the third drive piston (105), being sealingly penetrated by the first displacement rod (3a),
with the second drive piston (104), which is adapted to be axially displaceable in a limited manner in both directions with respect to the first drive piston (103) and in each case against the force of the second spring (108),
with the first and the second drive piston (103, 104), which partially limit a first pressure medium space (120) pressurised by a first flow (D1) of pressure medium and get off from each other in this,
and with the second and the fourth drive piston (104, 106), which by their front surfaces each facing away from the first drive piston (103) partially limit a second pressure medium space (121) pressurised by a second flow (D2) of pressure medium and each move in the direction towards the first drive piston (103) in this.

2. Device according to claim 1,
**characterised in that**
the device (100), in the closed position of the first closing element (3) and during the opening movement of the double seat valve (1), guides the second closing element (4) towards the first closing element (3) by a pick-up stroke (h) at first, **in that** the second drive piston (104) abuts the fourth drive piston (106) after the pick-up stroke (h) when it is pressurised by the first flow (D1) of pressure medium.

3. Device according to claim 1 or 2,
**characterised in that**
the device (100) actuates the double seat valve (1) in which the annular slide part (5), the first, the second and also the third seating area (5e, 2a, 2b) are each realised cylindrically and the closing elements (3, 4) each as slide pistons.

4. Device according to any one of claims 1 to 3,
**characterised in that**
the device (100) actuates the double seat valve (1) in which the second closing element (4) at its end facing the first closing element (3), has a recess (4f) with an essentially cylindrical circumference wall (4h) falling in line with the first seating area (5e), and the recess (4f) is dimensioned such as to sealingly receive the first closing element (3) during the opening movement before the second closing element (4) opens.

5. Device according to any one of claims 1 to 4,
**characterised in that**
the device (100) actuates the double seat valve (1), namely with a cylindrical second lug (4*) arranged on the second closing element (4) at the leakage space side, which forms an annular second choke gap with the associated second seating area (2a) after the completion of the second partial stroke (T2), with a cylindrical first lug (3*) arranged on the first closing element (3) as to be facing away from the leakage space side, which forms an annular first choke gap with the associated first seating area (5e) after the completion of the first partial stroke (T1), and with a cylindrical third lug (5*) arranged on the slide part (5) at the leakage space side, which forms an annular third choke gap with the associated third seating area (2b) after the completion of the first partial stroke (T1).

6. Device according to any one of claims 1 to 5,
**characterised in that**
the device (100) actuates the double seat valve (1), in which a transition area (2e) is provided between the second and the third seating area (2a, 2b), and in which an annular second recess (5c) in the form of a deflection area (5b) is disposed in the front side of the slide part (5) facing the leakage cavity (9).

7. Device according to any one of claims 1 to 6,
**characterised in that**
the first housing (101) is formed by a pot-shaped first and a pot-shaped second housing part (101a, 101b), that the first drive piston (103) is lodged in the first (101a) and the third drive piston (105) in the second housing part (101b) and they are each sealingly guided at the perimeter side there, and receive the first spring (107) between each other, and that a first bottom part (101c) of the first housing part (101a) has a central first passage opening (101e) and a second bottom part (101d) of the second housing part (101b) has a central second passage opening (101f).

8. Device according to claim 7,
**characterised in that**
a connection ring (101h) is provided, which joins and centres the lateral areas of the housing parts (101a, 101b) at the inner side, and that the connection between the housing parts (11a, 101b) and the connection ring (101h) is by substance to substance bond.

9. Device according to claim 7 or 8,
**characterised in that**
the first bottom part (101c) has an annular lug (101g) enclosing the first passage opening (101e) and extending axially away from the second bottom part (101d), by way of which there is a detachable connection with the pot-shaped second housing (102) at the outer side.

10. Device according to claim 9,
**characterised in that**
a housing bottom (102a) of the second housing (102) is connected with a control unit (30), wherein the housing bottom (102a) has a central third passage opening (102b) in which a second feedback rod (104c), fixedly connected with the second drive piston (104), realised as a hollow rod and engaging into the control unit (30) is sealingly guided, wherein the latter is penetrated by a first feedback rod (103e) that is directly or indirectly fixedly connected to the first drive piston (103) and engaging into the control unit (30).

11. Device according to any one of claims 1 to 10,
**characterised in that**
the first drive piston (103) has a pot-shaped first piston shaft (103a), which is detachably connected with the first displacement rod (3a) in the region of the pot bottom (103c) and sealingly penetrated by the second displacement rod (4a) there, that in a central cylindrical recess (103b) engaging in the first piston shaft (103a) from out the open side is disposed the second spring (108), which is supported under prestress via a first abutment disc (109) on the pot bottom (103c) at the one side, and via a second abutment disc (110) on the first piston shaft (103a) at the other side, wherein the second displacement rod (4a) penetrates the abutment discs (109, 110) in an axially displaceable way, and in the direction towards the second spring (108) it is adapted to be put into engagement in a catching connection with the respective abutment disc (109, 110) that is in the run.

12. Device according to claim 10 or 11,
**characterised in that**
a transverse rod (103d) diametrically bridging over the cylindrical recess (103b) is provided in the region of the outlet end of the pot-shaped first piston shaft (103a), that the transverse rod (103d) penetrates there a sleeve-shaped second piston shaft (104a) fixedly connected to the second drive piston (104) within a slot-like shaped cross hole (104b) in such a way that it can be axially displaced in a limited manner, and that the transverse rod (103d) is fixedly connected to the first feedback rod (103e).

13. Device according to any one of claims 1 to 12,
**characterised in that**
at its end facing away from the first drive piston (103), the sleeve-shaped fourth drive piston (106) is provided with an inside recess (106a), which forms the catching connection with the second drive piston (104) on the one hand, and on the other hand a twelfth contact surface (106.1) for the same.

14. Device according to any one of claims 1 to 13,
**characterised in that**
the piston area of the first drive piston (103) that is effective when pressurised by pressure medium, is greater than the piston area of the second drive piston (104) that is effective when pressurised by pressure medium.

15. Device according to any one of claims 1 to 14,
**characterised in that**
the first pressure medium space (120) is limited by the housing (101/102) and the first drive piston (103) at the one side, and by the second and the fourth drive piston (104, 106) at the other side.

16. Device according to claim 15,
**characterised in that**
a first pressure medium channel (115) destined for the first pressure medium flow (D1) runs out into the first pressure medium space (120), wherein this channel is guided thereto in an extension of the second drive piston (104) penetrating the second housing (102).

17. Device according to any one of claims 1 to 16,
**characterised in that**
the second pressure medium space (121) is limited by the second housing (102) at the one side, and by the second and the fourth drive piston (104, 106) at the other side.

18. Device according to any one of claims 1 to 17,
**characterised in that**
a third pressure medium space (122) is limited by the first housing (101) at the one side, and by the third drive piston (105) at the other side.

19. Device according to any one of claims 1 to 18,
**characterised in that**
in order to limit the second partial stroke (T2), the fourth drive piston (106) rests on a second contact surface (101a.2) formed on the first housing (101) with a thirteenth contact surface (106.2).

20. Device according to any one of claims 1 to 19,
**characterised in that**
in order to limit the first partial stroke (T1), the third drive piston (105) rests on a third contact surface (101h.1) formed on the first housing (101) with a tenth contact surface (105.1)

21. Device according to any one of claims 1 to 20,
**characterised in that**
in order to secure the closed position of the slide part (5), the latter rests on the transition area (2e) that bridges over the first and the second seating area (2a, 2b).

## Revendications

1. Dispositif (100) d'entraînement d'une soupape à double siège (1) comprenant deux éléments de fermeture (3, 4) mobiles l'un par rapport à l'autre et disposés en série, qui évitent dans la position de fermeture de la soupape à double siège (1) le débordement de fluides d'une partie de cage de soupape (1a, 1b) à une autre (1b ; 1a) par un orifice de liaison (2c) reliant ces parties de cage de soupape (1a ; 1b) d'une cage de soupape (10) entre elles, et qui délimitent non seulement dans la position de fermeture, mais aussi dans la position d'ouverture de la soupape à double siège (1) une cavité de fuite (9) qui est reliée à l'environnement de la soupape à double siège (1), avec une partie coulissante (5) annulaire axialement mobile qui est positionnée de façon étanche non seulement dans la position de fermeture, mais aussi dans la position d'ouverture de la soupape à double siège (1) radialement vers l'extérieur dans une troisième surface d'appui (2b) formée dans l'orifice de liaison (2c) et forme vers l'intérieur une première surface d'appui (5e) qui s'étend coaxialement à l'orifice de liaison (2c) et est reliée de manière perméable aux fluides à ce dernier. Dans la position de fermeture, le premier élément de fermeture (3) est positionné de façon étanche dans la première surface d'appui (5e) et au cours de son mouvement d'ouverture produit par le dispositif (100) vient en appui étanche contre le deuxième élément de fermeture (4) associé à une deuxième surface d'appui (2a) conçue dans l'orifice de liaison (2c), et présentant un diamètre supérieur à celui du premier élément de fermeture (3), et est également transféré enfin lors du mouvement d'ouverture ultérieur dans une position d'ouverture (H), avec respectivement des positions de nettoyage de siège produites à travers le dispositif (100) pour les éléments de fermeture (3, 4) et la partie coulissante (5) à des fins de rinçage de leurs surfaces d'appui coaxiales (5e, 2a, 2b), le deuxième élément de fermeture (4) pouvant être transféré à travers une deuxième course partielle (T2) axée sur le mouvement d'ouverture et la partie coulissante (5) pouvant être transférée à travers une première course partielle (T1) opposée au mouvement d'ouverture dans sa position respective de nettoyage de siège, avec des tiges de commande (3a, 4a, 5a) s'emboîtant les unes dans les autres de manière télescopique introduites dans le dispositif (100) et ressortant vers l'extérieur sur la face du premier élément de fermeture (3) hors de la cage de soupape (10), la première tige de commande (3a) étant associée au premier élément de fermeture (3), la deuxième tige de commande (4a) étant associée au deuxième élément de fermeture (4) et la troisième tige de commande (5a) étant associée à la partie coulissante (5), **caractérisé en ce que** le dispositif (100) comporte à l'intérieur d'une cage (101/102)
• un premier piston d'entraînement (103) en forme de pot soumis à l'action du fluide, coulissant à l'encontre de la force d'un premier ressort (107) et relié fixement à la première tige de commande (3a),
• un deuxième piston d'entraînement (104) soumis à l'action du fluide, coulissant à l'encontre de la force d'un deuxième ressort (108) et fixement relié à la deuxième tige de commande (4a), le deuxième ressort (108) s'appuyant d'autre part directement ou indirectement sur le premier piston d'entraînement (103) et la deuxième tige de commande (4a) étant guidée de manière étanche à travers la première tige de commande (3a) en forme de barre creuse en communication avec le premier piston d'entraînement (103),
• un quatrième piston d'entraînement (106) en forme de manchon soumis à l'action du fluide qui enveloppe de façon étanche le deuxième piston d'entraînement (104) sur sa surface périphérique et peut être amené en direction du premier piston d'entraînement (103) en prise dans une liaison d'entraînement avec le deuxième piston d'entraînement (104),
• ainsi qu'un troisième piston d'entraînement (105) soumis à l'action du fluide, coulissant à l'encontre de la force du premier ressort (107) et fixement relié à la troisième tige de commande (5a), et la troisième tige de commande (5a) en forme de barre creuse est traversée de façon étanche en communication avec le troisième piston d'entraînement (105) par la première tige de commande (3 a),
le deuxième piston d'entraînement (104) étant coulissant dans les deux directions et respectivement à l'encontre de la force du deuxième ressort (108) en étant limité axialement par rapport au premier piston d'entraînement (103),
le premier et le deuxième pistons d'entraînement (103, 104) délimitant partiellement un premier compartiment de fluide (120) soumis à l'action du premier courant de fluide (D1) et s'écartant l'un de l'autre,
le deuxième et le quatrième pistons d'entraînement (104, 106) délimitant partiellement avec leur surface frontale respectivement opposée au premier piston d'entraînement (103) un deuxième compartiment de fluide (121) soumis à l'action du deuxième courant de fluide (D2) et se déplaçant respectivement en direction du premier piston d'entraînement (103).

2. Dispositif selon la revendication 1,
**caractérisé en ce que**
le dispositif (100) dans la position de fermeture du premier élément de fermeture (3), et au cours du mouvement d'ouverture de la soupape à double siège (1) le deuxième élément de fermeture (4), sont rapprochés du premier élément de fermeture (3) tout d'abord avec une course d'enlèvement (h), en amenant en appui le deuxième piston d'entraînement (104) après la course d'enlèvement (h) contre le quatrième piston d'entraînement (106) lorsque le premier courant de fluide (D1) exerce son action.

3. Dispositif selon les revendications 1 ou 2,
**caractérisé en ce que**
le dispositif (100) actionne la soupape à double siège (1), dans laquelle la partie coulissante (5) annulaire, les première, deuxième et troisième surfaces d'appui (5e, 2a, 2b) sont respectivement cylindriques et les éléments de fermeture (3, 4) sont configurés comme des pistons coulissants.

4. Dispositif selon une des revendications 1 à 3,
**caractérisé en ce que**
le dispositif (100) actionne la soupape à double siège (1), dans laquelle le deuxième élément de fermeture (4) possède à son extrémité dirigée vers le premier élément de fermeture (3) un évidement (4f) comprenant une paroi périphérique (4h) essentiellement cylindrique alignée sur la première surface d'appui (5e), et l'évidement (4f) est conçu pour recevoir de façon étanche pendant le mouvement d'ouverture le premier élément de fermeture (3) avant que le deuxième élément de fermeture (4) s'ouvre.

5. Dispositif selon une des revendications 1 à 4,
**caractérisé en ce que**
le dispositif (100) actionne la soupape à double siège (1), et ceci avec un deuxième épaulement (4*) cylindrique agencé sur le deuxième élément de fermeture (4) côté cavité de fuite, lequel épaulement forme après exécution de la deuxième course partielle (T2) avec la deuxième surface d'appui associée (2a) une deuxième fente d'étranglement annulaire, avec un premier épaulement (3*) cylindrique agencé à l'opposé de la cavité de fuite sur le premier élément de fermeture (3), lequel épaulement forme après exécution de la première course partielle (T1) avec la première surface d'appui associée (5e) une première fente d'étranglement annulaire et avec un troisième épaulement (5*) cylindrique agencé côté cavité de fuite sur la partie coulissante (5), lequel forme après exécution de la première course partielle (T1) avec la troisième surface d'appui associée (2b) une troisième fente d'étranglement annulaire.

6. Dispositif selon une des revendications 1 à 5,
**caractérisé en ce que**
le dispositif (100) actionne la soupape à double siège (1), dans laquelle une surface de transition (2e) est prévue entre les deuxième et troisième surfaces d'appui (2a, 2b), et dans laquelle un deuxième évidement annulaire (5c) sous forme d'une surface de déviation (5b) est agencé dans la face frontale dirigée vers la cavité de fuite (9) de la partie coulissante (5).

7. Dispositif selon une des revendications 1 à 6,
**caractérisé en ce que**
la première cage (101) est formée d'une première et d'une deuxième parties de cage (101 a, 101b) en forme de pot, **en ce que** le premier piston d'entraînement (103) est positionné dans la première partie de cage (101a) et le troisième piston d'entraînement (105) est positionné dans la deuxième partie de cage (101b), ils y sont guidés sur la périphérie de manière étanche et accueillent entre eux le premier ressort (107), et **en ce qu'**une première partie de fond (101c) de la première partie de cage (101a) possède un premier orifice de passage central (101e) et une deuxième partie de fond (101d) de la deuxième partie de cage (101b) possède un deuxième orifice de passage central (101f).

8. Dispositif selon la revendication 7,
**caractérisé en ce que**
une bague de liaison (101h) est prévue, laquelle centre et aboute vers l'intérieur les surfaces périphériques des parties de cage (101a, 101b), et **en ce que** la liaison entre les parties de cage (101a, 101b) et la bague de liaison (101h) se fait par complémentarité de matière.

9. Dispositif selon les revendications 7 ou 8,
**caractérisé en ce que**
la première partie de fond (101c) présente un épaulement (101g) annulaire s'étendant axialement depuis la deuxième partie de fond (101d), entourant le premier orifice de passage (101e), au-dessus duquel existe une liaison détachable vers l'extérieur avec la deuxième cage en forme de pot (102).

10. Dispositif selon la revendication 9,
**caractérisé en ce que**
un fond de cage (102a) de la deuxième cage (102) est relié à un dispositif de commande (30), le fond de cage (102a) présentant un troisième orifice de passage central (102b) dans lequel est guidée de manière étanche une deuxième tige de signalisation (104c) s'engageant dans le dispositif de commande (30), configurée comme une barre creuse et fixement reliée au deuxième piston d'entraînement (104), cette tige de signalisation étant traversée par une première tige de signalisation (103e) s'engageant dans le dispositif de commande (30) et fixement reliée directement ou indirectement au premier piston d'entraînement (103).

11. Dispositif selon une des revendications 1 à 10,
**caractérisé en ce que**
le premier piston d'entraînement (103) présente un premier corps de piston configuré en forme de pot (103a), qui est relié de façon détachable dans la zone d'un fond de pot (103c) à la première tige de commande (3a) et y est traversé de manière étanche par la deuxième tige de commande (4a), **en ce que** dans un évidement cylindrique (103b) central s'engageant dans le premier corps de piston (103a) depuis la face ouverte est agencé le deuxième ressort (108) qui s'appuie sous précontrainte d'une part sur le fond de pot (103c) sur un premier plateau de contre-appui (109) et d'autre part sur un deuxième plateau de contre-appui (110) sur le premier corps de piston (103a), la deuxième tige de commande (4a) traversant par glissement axial les plateaux de contre-appui (109, 110) et étant amenée en direction du deuxième ressort (108) en prise dans une liaison d'entraînement avec le plateau de contre-appui concerné (109, 110).

12. Dispositif selon les revendications 10 ou 11,
**caractérisé en ce que**
dans la zone de l'extrémité de sortie du premier corps de piston en forme de pot (103a) est prévue une tige transversale (103d) reliant diamétralement l'évidement cylindrique (103b), **en ce que** la tige transversale (103d) traverse par glissement axial limité un deuxième corps de piston en forme de manchon (104a) relié fixement au deuxième piston d'entraînement (104) à l'intérieur d'un alésage transversal (104b) en forme de trou oblong, et **en ce que** la tige transversale (103d) est reliée fixement à la première tige de signalisation (103e).

13. Dispositif selon une des revendications 1 à 12,
**caractérisé en ce que**
le quatrième piston d'entraînement en forme de manchon (106) est muni à son extrémité opposée au premier piston d'entraînement (103) d'un évidement côté interne (106a) qui forme d'une part la liaison d'entraînement avec le deuxième piston d'entraînement (104), et d'autre part une douzième surface de butée (106.1) pour le deuxième piston d'entraînement (104).

14. Dispositif selon une des revendications 1 à 13,
**caractérisé en ce que**
la surface de piston efficace soumise à l'action du fluide du premier piston d'entraînement (103) est supérieure à la surface de piston efficace soumise à l'action du fluide du deuxième piston d'entraînement (104).

15. Dispositif selon une des revendications 1 à 14,
**caractérisé en ce que**
le premier compartiment de fluide (120) est limité par la cage (101/102) et par le premier piston d'entraînement (103) d'une part, et par les deuxième et quatrième pistons d'entraînement (104,106) d'autre part.

16. Dispositif selon la revendication 15,
**caractérisé en ce que**
dans le premier compartiment de fluide (120) débouche un premier canal de fluide (115) défini pour le premier courant de fluide (D1), ce premier canal étant rapproché dans un prolongement traversant la deuxième cage (102) du deuxième piston d'entraînement (104).

17. Dispositif selon une des revendications 1 à 16,
**caractérisé en ce que**
le deuxième compartiment de fluide (121) est limité d'une part par la deuxième cage (102) et d'autre part par les deuxième et quatrième pistons d'entraînement (104, 106).

18. Dispositif selon une des revendications 1 à 17,
**caractérisé en ce que**
un troisième compartiment de fluide (122) est limité d'une part par la première cage (101) et d'autre part par le troisième piston d'entraînement (105).

19. Dispositif selon une des revendications 1 à 18,
**caractérisé en ce que**
pour limiter la deuxième course partielle (T2), le quatrième piston d'entraînement (106) repose avec une treizième surface de butée (106.2) sur une deuxième surface de butée (101a.2) formée sur la première cage (101).

20. Dispositif selon une des revendications 1 à 19,
**caractérisé en ce que**
pour limiter la première course partielle (T1), le troisième piston d'entraînement (105) repose avec une dixième surface de butée (105.1) sur une troisième surface de butée (101h.1) formée sur la première cage (101).

21. Dispositif selon une des revendications 1 à 20,
**caractérisé en ce que**
pour garantir la position de fermeture de la partie coulissante (5), cette dernière repose sur la surface de transition (2e) reliant les première et seconde surfaces d'appui (2a, 2b).
